(19) Europäisches Patentamt
European Patent Office
Office européen des brevets

(11) Veröffentlichungsnummer: **0 114 032**
**B1**

(12) # EUROPÄISCHE PATENTSCHRIFT

(45) Veröffentlichungstag der Patentschrift: **01.07.87**

(51) Int. Cl.⁴: **C 09 B 62/443,** D 06 P 3/66

(21) Anmeldenummer: **83810588.0**

(22) Anmeldetag: **14.12.83**

(54) **Reaktivfarbstoffe, deren Herstellung und Verwendung.**

(30) Priorität: **20.12.82 CH 7431/82**

(43) Veröffentlichungstag der Anmeldung: **25.07.84 Patentblatt 84/30**

(45) Bekanntmachung des Hinweises auf die Patenterteilung: **01.07.87 Patentblatt 87/27**

(84) Benannte Vertragsstaaten: **CH DE FR GB IT LI**

(56) Entgegenhaltungen: **FR-A-1 372 343**
**FR-A-2 034 778**

(73) Patentinhaber: **CIBA- GEIGY AG, Klybeckstrasse 141, CH- 4002 Basel (CH)**

(72) Erfinder: **Scheibli, Peter, Dr., Nussbaumweg 3, CH- 4103 Bottmingen (CH)**

EP 0 114 032 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Die Entwicklung auf dem Reaktivgebiet ist daher noch nicht abgeschlossen, und es besteht weiterhin ein Bedarf nach neuen Reaktivfarbstoffen, welche verbesserte Eigenschaften, allgemein und insbesondere in bezug auf die Applikation, aufweisen.

Der vorliegenden Erfindung lag die Aufgabe zugrunde, neue verbesserte Reaktivfarbstoffe zu finden, die sich durch gute Allgemeinechtheiten, beispielsweise Nassechtheiten, und insbesondere durch hohe Fixierausbeuten und hohe Faser-Farbstoff-Bindungsstabilitäten auszeichnen. Die neuen Farbstoffe sollten besonders für das Färben nach dem Ausziehverfahren und dem Kaltverweilverfahren und auch für den Druck geeignet sein, und ausserdem sollten die nicht auf der Faser fixierten Anteile leicht auswaschbar sein.

Die weiter unten definierten neue Reaktivfarbstoffe entsprechen den gestellten Anforderungen.

Gegenstand der Erfindung sind Reaktivfarbstoffe der Formel

$$Y-SO_2-\left[-A-CO-\underset{R_1}{\underset{|}{N}}-\right]_n-D-\underset{R_2}{\underset{|}{N}}-CO-Z \qquad (1)$$

worin D der Rest eines Farbstoffes der Mono- oder Polyazo-, Metall-komplexazo-, Anthrachinon-, Phthalocyanin-, Formazan-, Azomethin, Dioxazin, Phenazin-, Stilben-, Triphenylmethan-, Xanthen-, Thioxanthon-, Nitroaryl-, Naphthochinon-, Pyrenchinon- oder Perylentetracarbimid-Reihe, $R_1$ und $R_2$ unabhängig voneinander Wasserstoff oder der Rest eines gegebenenfalls substituierten Kohlenwasserstoffs, A ein gegebenenfalls substituiertes aliphatisches oder aromatisches Brückenglied, n = 0 oder 1, Y ein Rest $-CH=CH_2$ oder $-CH_2CH_2-X$, X ein unter alkalischen Bedingungen abspaltbarer anorganischer oder organischer Rest, Z ein Rest

$$-\underset{Hal}{\underset{|}{CH}}-CH_2-Hal$$

$$-\underset{Hal}{\underset{|}{C}}=CH_2$$

$$-(CH_2)_{3-5}-SO_2-CH_2CH_2-Hal$$

oder

$$-(CH_2)_{3-5}-SO_2-CH=CH_2$$

und Hal Chlor oder Brom ist, wobei, wenn n = 1 ist, Z keiner der beiden für Z zuletztgenannten Reste sein darf, ausgenommen 2-(α-Brom-acryloylamino)-4-amino-4'-(β-sulfatoäthylsulfonyl)-1,1'-azobenzol-5-sulfonsäure gemäss Beispiel 5 der EP-A-0 073 481.

Bevorzugte Verbindungsgruppen sind:

a) Reaktivfarbstoffe der Formel (1), worin D der Rest eines Mono- oder Disazofarbstoffes oder eines Metallkomplexazofarbstoffes ist;

b) Reaktivfarbstoffe der Formel (1), worin D der Rest eines Anthrachinonfarbstoffes ist;

c) Reaktivfarbstoffe der Formel (1), worin D der Rest eines Formazanfarbstoffes ist;

d) Reaktivfarbstoffe der Formel (1), worin D der Rest eines Dioxazinfarbstoffes ist;

e) Reaktivfarbstoffe gemäss a), worin D der Rest eines 1:1-Kupferkomplexazofarbstoffes der Benzol- oder Naphthalinreihe ist, und das Kupferatom an je eine metallisierbare Gruppe beidseitig in ortho-Stellung zur Azobrücke gebunden ist;

f) Reaktivfarbstoffe gemäss a), worin $R_1$ und $R_2$ unabhängig voneinander Wasserstoff oder Methyl ist;
g) Reaktivfarbstoffe gemäss f), der Formel

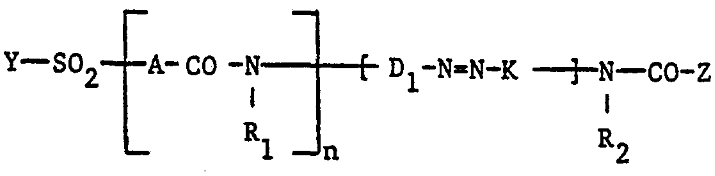 (2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, $R_1$ und $R_2$ unabhängig voneinander Wasserstoff oder Methyl, A ein Brückenglied $-(CH_2)-_{3\text{-}5}$, und n = 0 oder 1 ist, Y und Z die für Formel (1) geltenden Bedeutungen haben, und die Reste

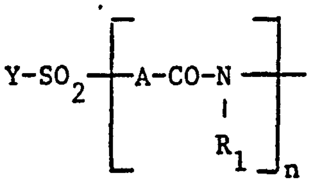 (3)

und

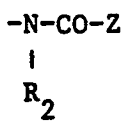 (4)

alternativ an die Diazokomponente und die Kupplungskomponente gebunden sind, oder beide Reste der Formeln (3) und (4) an die Diazo- oder beide an die Kupplungskomponente gebunden sind;
h) Reaktivfarbstoffe gemäss g), worin n = 1, A Propylen, Y β-Sulfatoäthyl, Vinyl, β-Acetoxyäthyl, β-Phosphonooxyäthyl, β-Thiosulfatoäthyl oder β-Chloräthyl, und Z α,β-Dibromäthyl oder α-Bromvinyl ist;
i) Reaktivfarbstoffe gemäss g), worin n = 0, Y β-Sulfatoäthyl, Vinyl, β-Acetoxyäthyl, β-Phosphonooxyäthyl, β-Thiosulfatoäthyl oder β-Chloräthyl, und Z α,β-Dibromäthyl, α-Bromvinyl, 3(β-Chloräthylsulfonyl)-propyl oder 3-Vinylsulfonylpropyl ist.

Der Rest D in Formel (1) kann in der üblichen Weise substituiert sein. Als Beispiele für weitere Substituenten am Rest D seien genannt Alkylgruppen mit 1 bis 4 Kohlenstoffatomen, wie Methyl, Äthyl, Propyl, Isopropyl oder Butyl, Alkoxygruppen mit 1 bis 4 Kohlenstoffatomen, wie Methoxy, Äthoxy, Propoxy, Isopropoxy oder Butoxy, Acylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Äthylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxy-carbonyl mit 1 bis 4 Kohlenstoffatomen im Alkoxyrest, wie Methoxycarbonyl oder Äthoxycarbonyl, Alkylsulfonyl mit 1 bis 4 Kohlenstoffatomen, wie Methylsulfonyl oder Äthylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Äthylcarbamoyl, Sulfamoyl, N-Alkylsulfamoyl mit 1 bis 4 Kohlenstoffatomen, wie N-Methylsulfamoyl, N-Äthylsulfamoyl, N-Propylsulfamoyl, N-Isopropylsulfamoyl oder N-Butylsulfamoyl, N-(β-Hydroxyäthyl)sulfamoyl, N,N-Di-(β-hydroxyäthyl)-sulfamoyl, N-Phenylsulfamoyl, Ureido, Hydroxy, Carboxy, Sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Äthyl, Methoxy, Acetylamino, Benzoylamino, Amino, Chlor, Brom, Ureido, Hydroxy, Carboxy, Sulfomethyl oder Sulfo.

Der Rest eines gegebenenfalls substituierten Kohlenwasserstoffs als $R_1$ oder $R_2$ ist z.B. ein Alkylrest, der geradkettig oder verzweigt ist, der vorzugsweise 1 bis 7 Kohlenstoffatome aufweist, und der weitersubstituiert sein kann, z.B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z.B. durch Methyl, Äthyl, Methoxy, Äthoxy, Chlor, Brom, Carboxy, Sulfo oder Sulfomethyl substituiert sein kann. Als Beispiele für $R_1$ und $R_2$ seien die folgenden Substituenten genannt: Methyl, Äthyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Äthoxycarbonylmethyl, β-Methoxyäthyl, β-Ähoxyäthyl, β-Methoxypropyl, β-Chloräthyl, γ-Brompropyl, β-Hydroxyäthyl, β-Hydroxybutyl, β-Cyanäthyl, Sufomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Äthylphenyl, p-Methoxyphenyl, o-, m- oder p-Sulfophenyl, p-Carboxyphenyl und p-Sulfomethylphenyl. Bevorzugt sind gegebenenfalls substituierte Alkylreste mit 1 bis 4 Kohlenstoffatomen, insbesondere Methyl.

Das aliphatische oder aromatische Brückenglied A ist vorzugsweise ein Alkylen- oder Arylenrest. So kann A ein langer (z.B. mit 10 oder mehr Kohlenstoffatomen) oder kürzerer, geradkettiger oder verzweigter Alkylenrest sein; insbesondere kommt ein Alkylenrest mit 2 bis 6 Kohlenstoffatomen in Betracht, z.B. Äthylen, Propylen, Butylen, Hexylen oder Cyclohexylen. Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Äthyl und Propyl, Alkoxygruppen mit 1 bis 4 Kohlenstoffatomen, wie Methoxy, Äthoxy, Propyloxy und Isopropyloxy, Carboxy oder Sulfo. Vorzugsweise ist A $C_{3-5}$-Alkylen. Bevorzugt ist der Propylenrest.

Als ein unter alkalischen Bedingungen abspaltbarer anorganischer oder organischer Rest X kommt eine der folgenden anionisch abspaltbaren Gruppen in Betracht:

$-OSO_3H$, $-SSO_3H$, $-OCOCH_3$, $-OPO_3H_2$

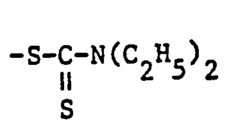 , 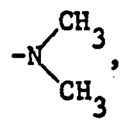 , 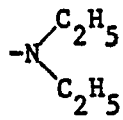 ,

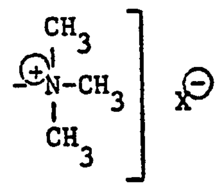 (X = Halogen),

-Cl, -Br, -F,

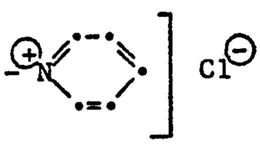 , 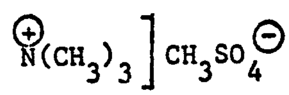

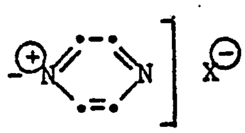 (X = Halogen),

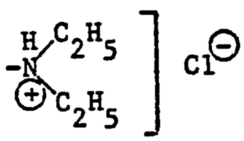 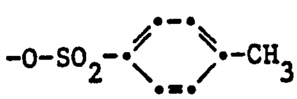 ,

$-O-SO_2-N(CH_3)_2$, 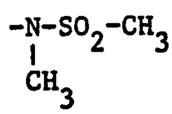 ,

$-O-SO_2-CH_3$, -S-C=N,

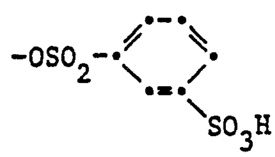

,

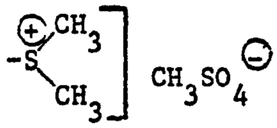

,

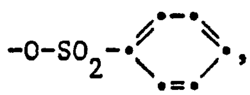

,

$-OOCCCl_3$, $-OOCCHCl_2$, $-OOCCH_2Cl$ ,

$-O-O_2SR$ (R = Alkyl oder Aryl), $-O-SO_2-N(C_2H_5)_2$,

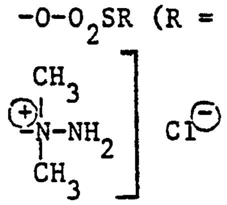

,

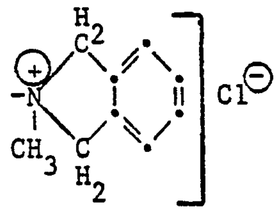

Vorzugsweise ist X der Rest $-OSO_3H$, $-SSO_3H$, $-OCOCH_3$, $-OPO_3H_2$ oder -Cl.
Falls in Formel (1) n = 1 ist, darf Z kein Rest
$-(CH_2)_{3\text{-}5}-SO_2-CH_2CH_2-Hal$
oder

$$-(CH_2)_{3-5}-SO_2-CH=CH_2$$

sein. Reaktivfarbstoffe, z.B. der Formel

$$Cl-CH_2CH_2-SO_2-(CH_2)_3-CO-NH-D-NH-CO-(CH_2)_3-SO_2-CH_2CH_2-Cl$$

sind somit ausgeschlossen.

Die Reste Y und Z in Formel (1) sind faserreaktiv.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bildungen zu reagieren vermögen.

Das Verfahren zur Herstellung der Reaktivfarbstoffe der Formel (1) ist dadurch gekennzeichnet, dass man in Farbstoffe der Formel

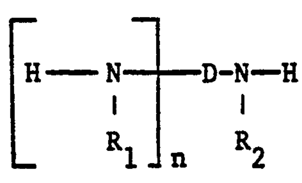

(5)

Reste der Formeln

$$Y\text{-}SO_2\text{-}\!\!\left[A\text{-}CO\right]_n \qquad (6)$$

und

$$\text{-}CO\text{-}Z \qquad (7)$$

in an sich bekannter Weise einführt, oder dass man Vorprodukte von Farbstoffen der Formel (5) verwendet, welche bereits Reste der Formel (6) bzw. (7) enthalten, und diese in die gewünschten Endfarbstoffe der Formel (1) überführt, und gegebenenfalls eine weitere Umwandlungsreaktion anschliesst.

Die Einführung der Reste der Formeln (6) und (7) in den Farbstoff der Formel (5) erfolgt vorzugsweise durch Acylierung mit entsprechenden Carbonsäurehalogeniden oder -anhydriden; für den Rest der Formel (6) gilt dies, wenn n = 1 ist. Der Farbstoff der Formel (5) weist in diesem Falle zwei acylierbare Aminogruppen, $-N(R_1)H$ und $-N(R_2)H$, auf. Falls n = 0 ist geht man zwecks Einführung des Restes $Y\text{-}SO_2\text{-}$ von einem Vorprodukt aus, das diesen Rest bereits enthält, z.B. verwendet man 1-Amino-4-β-sulfatoäthylsulfonylbenzol als Diazokomponente, siehe weiter unten. Vorzugsweise führt man die Acylierung des Farbstoffs der Formel (5), worin n = 1 ist, mit den beiden Acylierungsmitteln, z.B. den Acylhalogeniden der Formeln

$$Y\text{-}SO_2\text{-}A\text{-}CO\text{-}Hal \qquad (8)$$

und

$$Z\text{-}CO\text{-}Hal \qquad (9)$$

schrittweise nacheinander aus.

Die Verfahrensvariante, bei welcher man von Farbstoffvorprodukten ausgeht, ist geeignet zur Herstellung von Reaktivfarbstoffen der Formel (1), worin D der Rest eines aus zwei oder mehr als zwei Komponenten zusammengesetzten Farbstoffen ist. Beispiel für derartige, aus zwei oder mehr als zwei Komponenten zusammengesetzte Farbstoffe sind; Monoazo-, Disazo-, Trisazo-, Tetrazo-, Metallkomplexazo-, Formazan- und Azomethinfarbstoffe.

Handelt es sich z.B. um einen Monoazofarbstoff, kann man eine Diazokomponente, die ausser der zu diazotierenden Aminogruppe eine Gruppe $-N(R_1)H$ enthält, und eine Kupplungskomponente, die eine Gruppe $-N(R_2)H$ enthält, mit je einem Acylhalogenid der Formel (8) bzw. (9) umsetzen, und die erhaltenen Produkte durch Kupplung in den gewünschten Azofarbstoff überführen, und gegebenenfalls eine weitere Umwandlungsreaktion anschliessen.

Oder man acyliert zunächst eine Diazokomponente, die eine acylierbare Gruppe $-N(R_1)H$ enthält, mit einem Acylhalogenid der Formel (8), diazotiert und kuppelt auf eine Kupplungskomponente, die eine Gruppe $-N(R_2)H$ enthält, und acyliert die letztere nach vollzogener Kupplung mit einem Acylhalogenid der Formel (9).

Bei den oben beschriebenen Ausführungsformen kann die acylierbare Gruppe $-N(R_1)H$ auch in der Kupplungskomponente vorhanden sein, und dem entsprechend die Gruppe $-N(R_2)H$ in der Diazokomponente; d.h. die Stellung der Reste der Formeln (3) und (4) im fertigen Azofarbstoff ist nicht unveränderlich an bestimmte Ausgangskomponenten-Diazokomponente oder Kupplungskomponente - gebunden. Die Reste der Formeln (3) und (4) können, beispielsweise bei Disazofarbstoffen vom Typus

$$D_1 \longrightarrow K \longleftarrow D_2 \quad ,$$

auch an je eine Diazokomponente gebunden sein.

Reaktivfarbstoffe der Formel (1), worin n = 0 ist, sind in der Weise herstellbar, dass man von Farbstoffen ausgeht, die eine Gruppe $Y\text{-}SO_2\text{-}$ bereits enthalten, die somit der Formel

$$Y\text{-}SO_2\text{-}D\text{-}N(R_2)\text{-}H \qquad (10)$$

entsprechen, und die Gruppe $-N(R_2)H$ mit einem Acylhalogenid der Formel (9) acyliert; oder dass man entsprechende Vorprodukte benützt, z.B. eine Diazokomponente der Formel

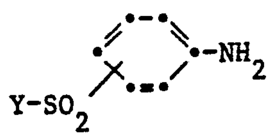 (11),

und diese auf eine Kupplungskomponente, welche eine Gruppe $-N(R_2)H$ enthält, kuppelt, und die Gruppe $-N(R_2)H$ vor oder nach der Kupplung mit einem Acylhalogenid der Formel (9) acyliert.

Ferner können die beiden Reste der Formeln (3) und (4) auch an ein und dieselbe Komponente gebunden sein, beispielsweise indem man eine nichtfaserreaktive Diazokomponente sowie eine Kupplungskomponente der Formel

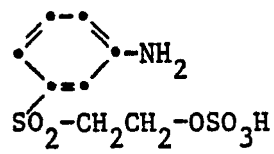 (12)

verwendet, und die $-NH_2$ Gruppe nach der Kupplung mit einem Acylhalogenid der Formel (9) acyliert.

Grundsätzlich lassen sich die Reaktivfarbstoffe der Formel (1) sämtlicher Farbstoffklassen in an sich bekannter Weise oder analog zu bekannten Verfahrensweisen herstellen, indem man von Vorprodukten oder Zwischenprodukten für Farbstoffe, die faserreaktive Reste der Formel (6) bzw. (7) enthalten, ausgeht, oder diese faserreaktiven Reste in hierfür geeignete Zwischenprodukte mit Farbstoffcharakter einführt.

Die Acylierung der Farbstoffe der Formel (5) oder der Farbstoffvorprodukte mit den Acylhalogeniden der Formeln (8) und (9) erfolgt nach an sich bekannten Methoden, vorzugsweise in wässriger Lösung oder Suspension und in Gegenwart von alkalischen, säurebindenden Mitteln, z.B. wässriger Alkalihydroxide, -carbonate oder -bicarbonate.

Eine andere vorteilhafte Methode besteht darin, zunächst einen Farbstoff herzustellen, der eine Vorstufe des Reaktivrestes enthält, und diese nachträglich in die Endstufe umzuwandeln, z.B. durch Veresterung oder eine Additionsreaktion. Beispielsweise kann man einen Farbstoff der Formel (10), worin Y ein Rest $HO-CH_2CH_2-$ ist, herstellen und das Zwischenprodukt vor oder nach der Acylierung mit Schwefelsäure umsetzen, so dass die Hydroxygruppe in die Sulfatogruppe überführt wird; oder man verwendet einen analogen Farbstoff, worin Y die Vinylgruppe $H_2C{=}CH-$ ist, und lagert an das Zwischenprodukt Thioschwefelsäure an, wobei ein Rest $HO_3SS-CH_2CH_2-$ entsteht.

Die Sulfatierung der Hydroxygruppe in einem Farbstoff der Formel (10) oder einem geeigneten Vorprodukt, erfolgt vorzugsweise durch Umsetzung mit konzentrierter Schwefelsäure bei 0°C bis mässig erhöhter Temperatur.

Diese Sulfatierung kann auch durch Reaktion der Hydroxyverbindung mit 2 Aequivalent Chlorsulfonsäure pro Hydroxygruppe in einem polaren organischen Lösungsmittel wie beispielsweise N-Methylpyrrolidon bei 10 bis 80°C erfolgen. Vorzugsweise erfolgt die Sulfatierung durch Eintragen der betreffenden Verbindung in Schwefelsäuremonohydrat bei Temperaturen zwischen 5 und 15°C.

Die Einführung eines anderen unter alkalischen Bedingungen abspaltbaren anorganischen oder organischen Restes für X in eine Verbindung der Formel (1) oder ein Zwischenprodukt anstelle eines Halogenatoms oder der Sulfatogruppe, beispielsweise einer Thiosulfato- oder Phosphatogruppe erfolgt in an sich bekannter Weise.

Ausserdem können Eliminierungsreaktionen an die Synthese angeschlossen werden. Beispielsweise kann man Reaktivfarbstoffe der Formel (1), welche Sulfatoäthylsulfonylreste enthalten, mit halogenwasserstoffabspaltenden Mitteln, wie Natriumhydroxid, behandeln, wobei die Sulfatoäthylsulfonylreste in Vinylsulfonylreste übergehen. Oder man kann, falls in einem Reaktivfarbstoff der Formel (1) der Rest der Formel (4) ein α,β-Dibrompropionylaminorest ist, durch Behandlung mit halogenwasserstoffabspaltenden Mitteln, die α,β-Dibrompropionylgruppe in die α-Bromacryloylgruppe umwandeln, gegebenenfalls gleichzeitig mit der oben erwähnten Abspaltung von Schwefelsäure aus einem Sulfatoäthylsulfonylrest.

Der oben beschriebene Weg der Herstellung über eine Zwischenstufe des Reaktivrestes geht in vielen Fällen einheitlich und vollständig.

Liegen in den hergestellten Reaktivfarbstoffen zur Metallkomplexbildung befähigte Gruppen vor, können die Reaktivfarbstoffe auch nachträglich metallisiert werden.

Im folgenden sollen mögliche Ausgangsstoffe, die zur Herstellung der Reaktivfarbstoffe der Formel (1) verwendet werden können, einzeln genannt werden.

Als Farbstoffe der Formel (5) kommen besonders Farbstoffe der folgenden Strukturtypen in Betracht:

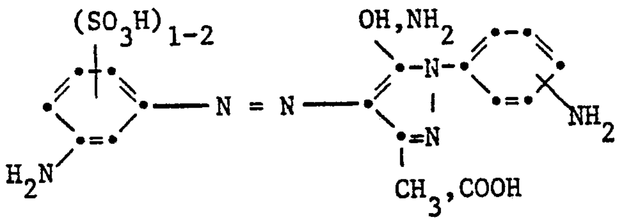

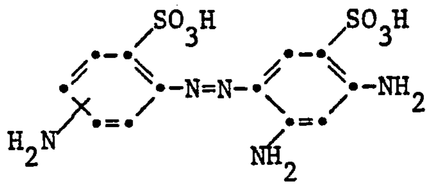

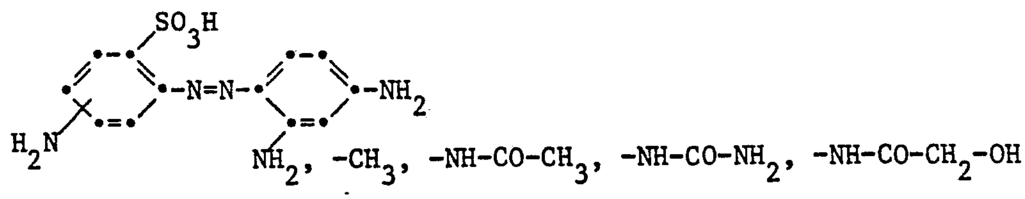

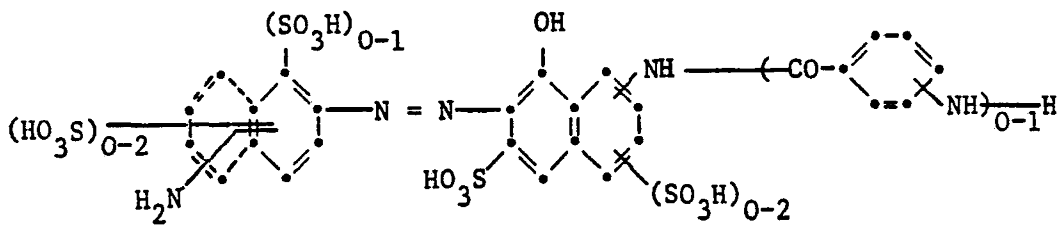

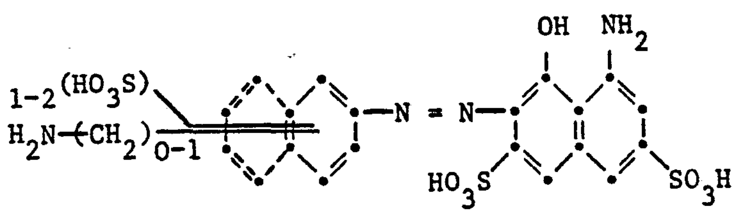

Metallkomplexe von Farbstoffen der Formeln:

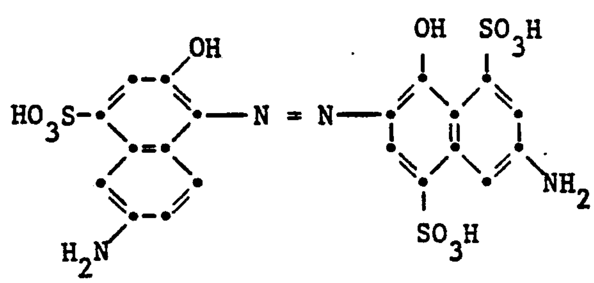

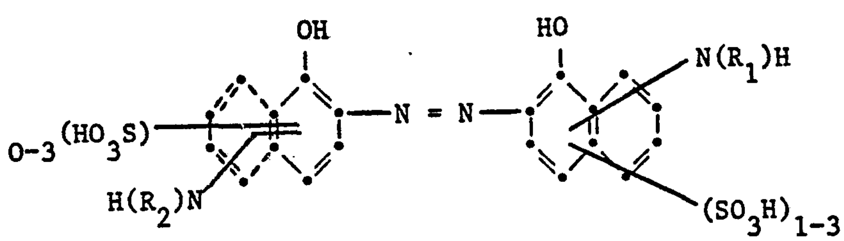

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. sie können symmetrisch oder mit beliebigen anderen Ligandengruppen unsymmetrisch aufgebaut sein.

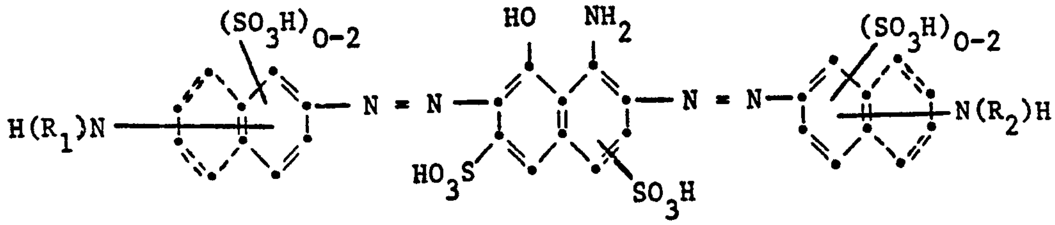

Die durch Strichelungen angedeuteten kondensierten Ringe stehen für alternativ mögliche Naphthalinsysteme.

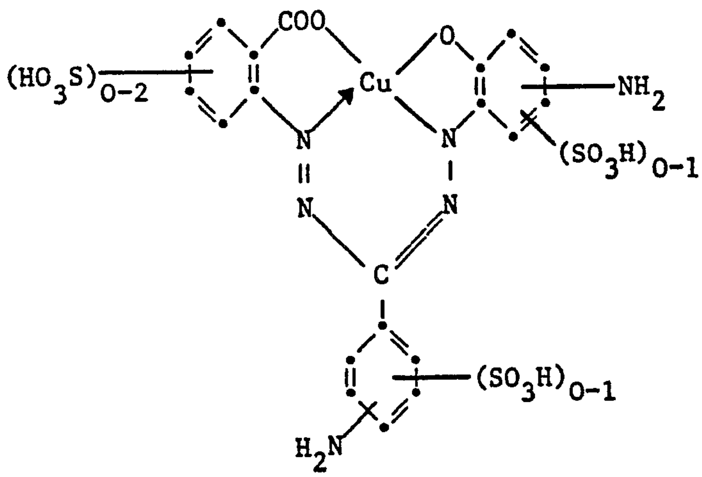

Die Farbstoffe der oben angegebenen Formeln können in den Alkyl- oder Arylresten weitersubstituiert sein, insbesondere durch die bei der Erläuterung von D in Formel (1) genannten Substituenten.

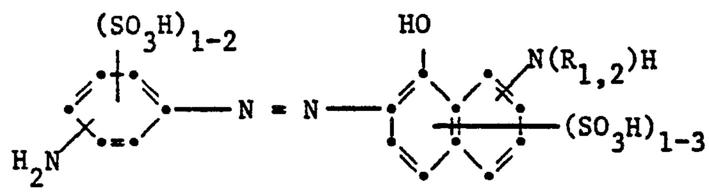

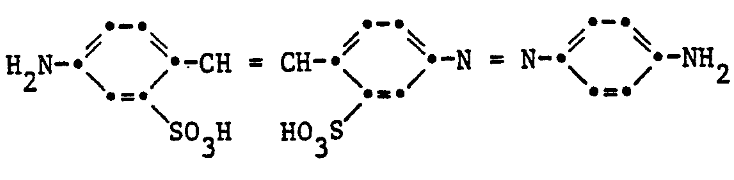

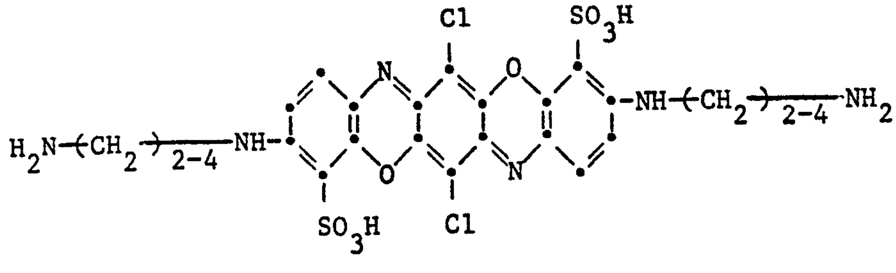

sowie die Metallkomplex-Azofarbstoffe der Formeln

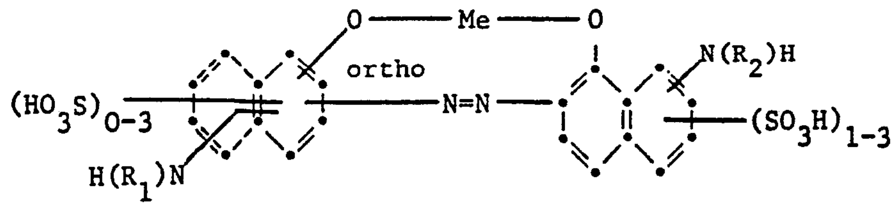

worin Me für Cu, Cr oder Co steht, und

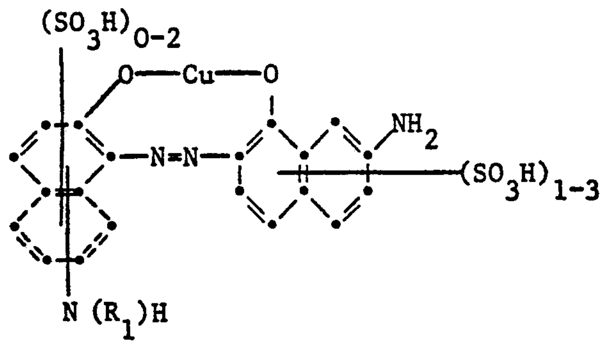

Beispiele für Farbstoffe der Formel (10) sind:

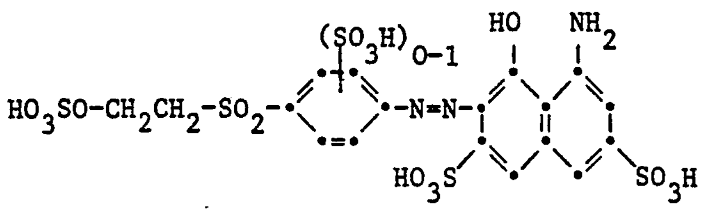

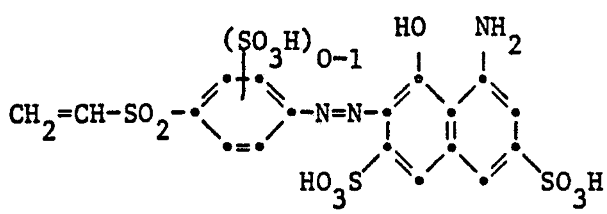

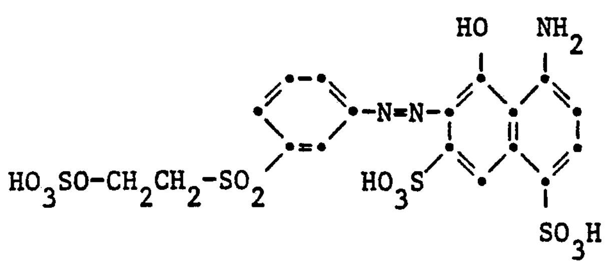

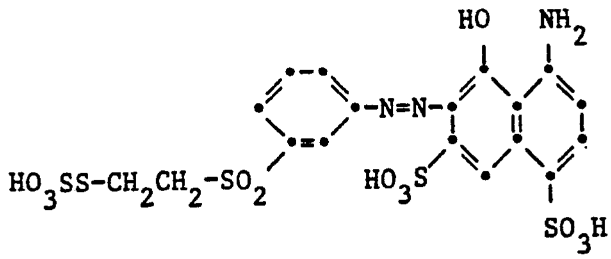

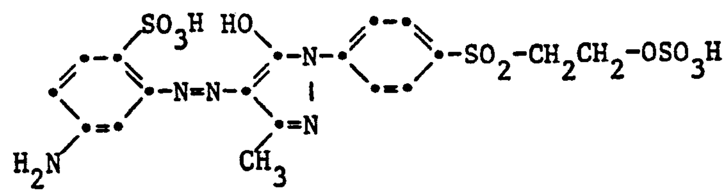

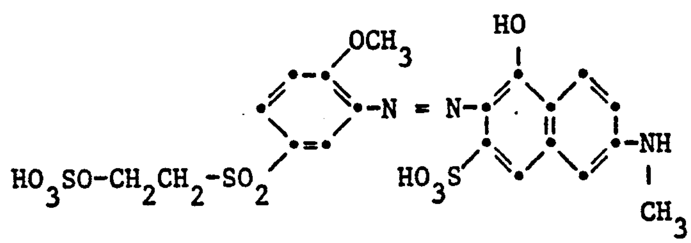

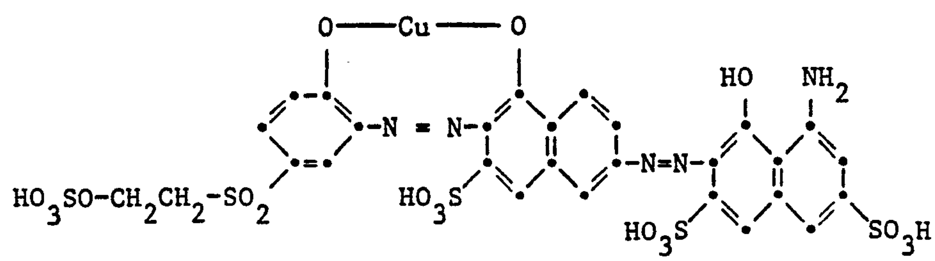

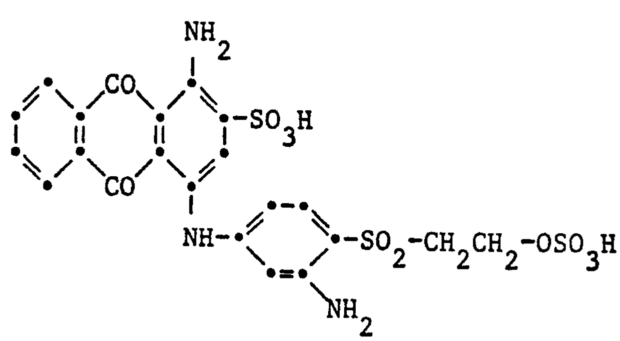

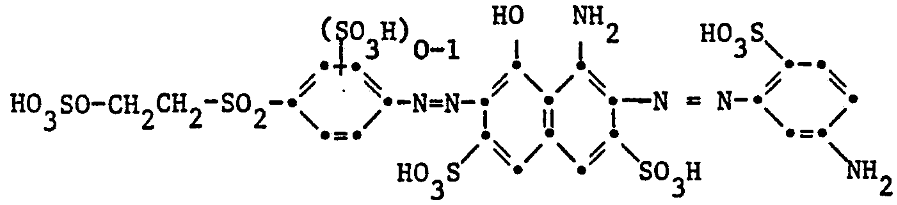

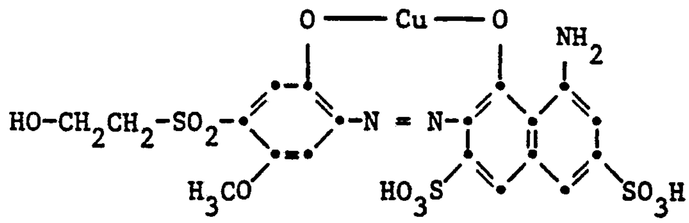

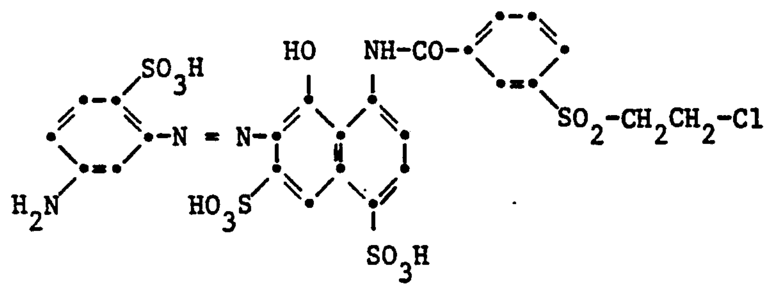

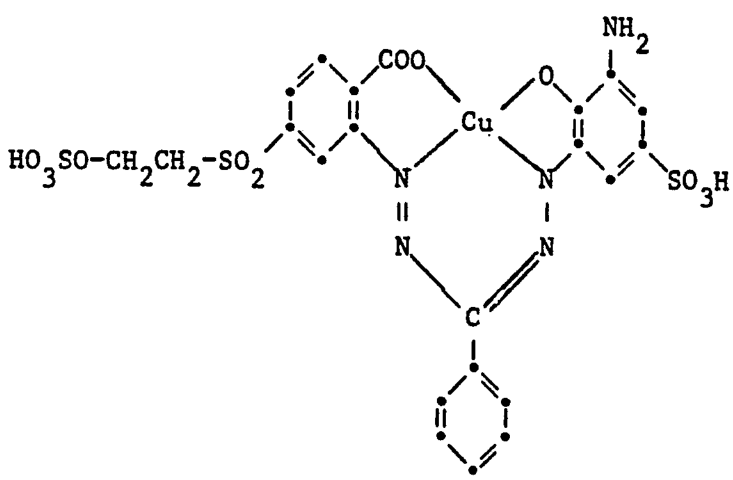

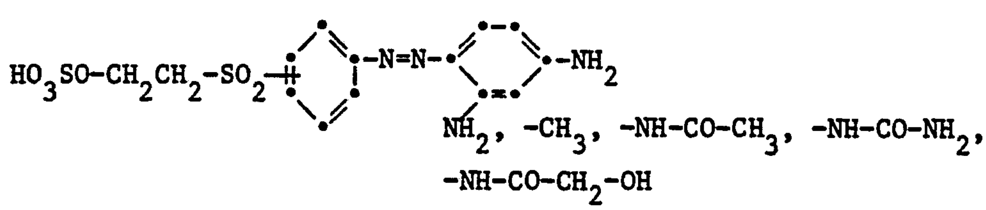

>>>

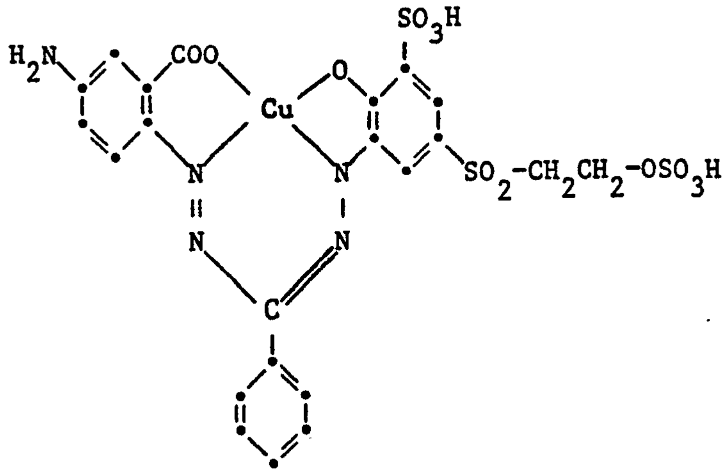

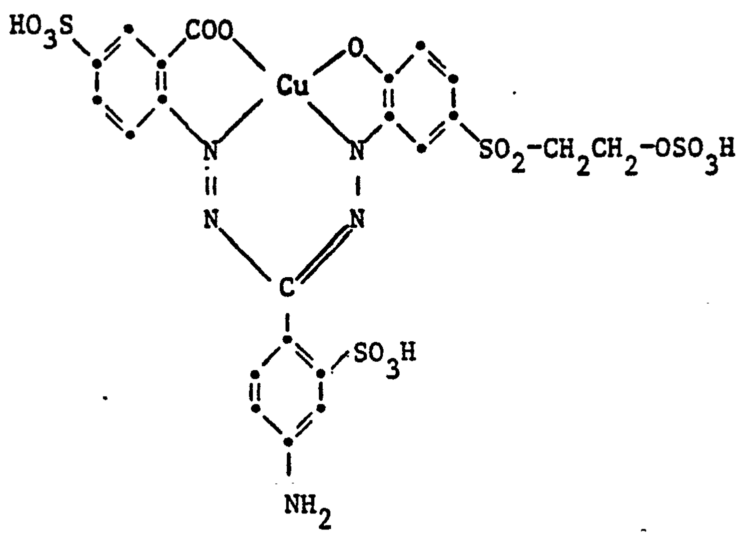

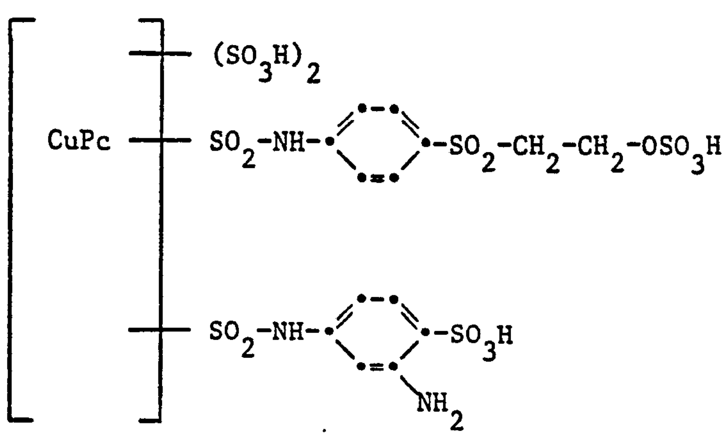

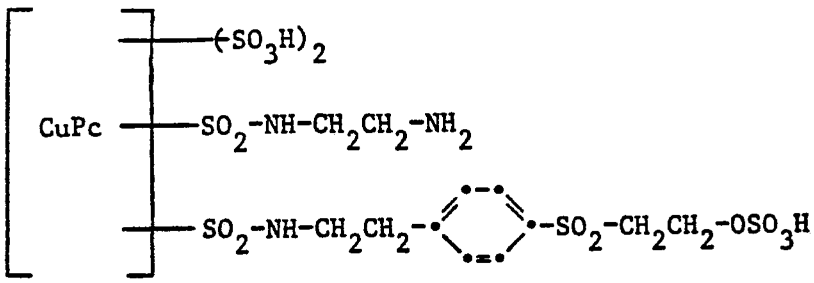

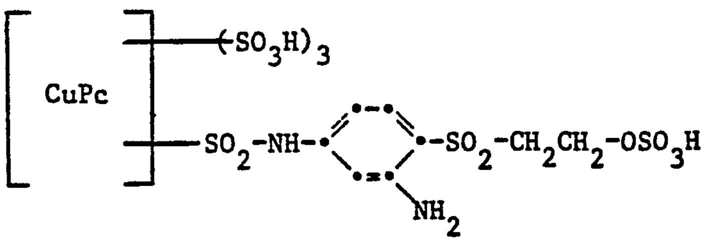

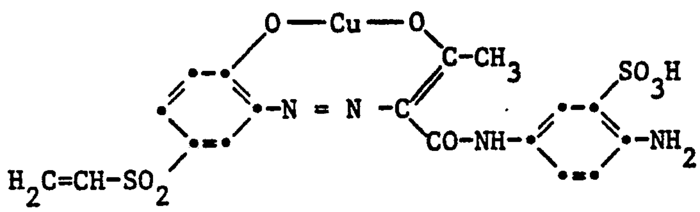

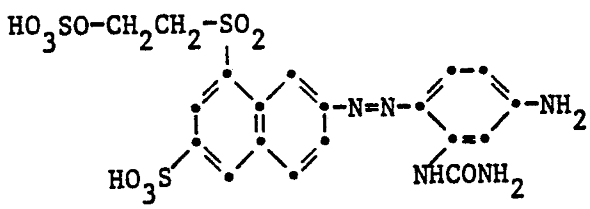

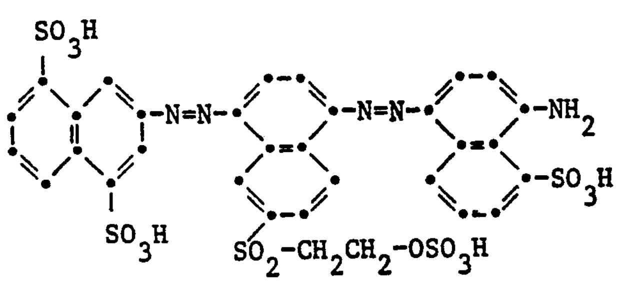

>>>

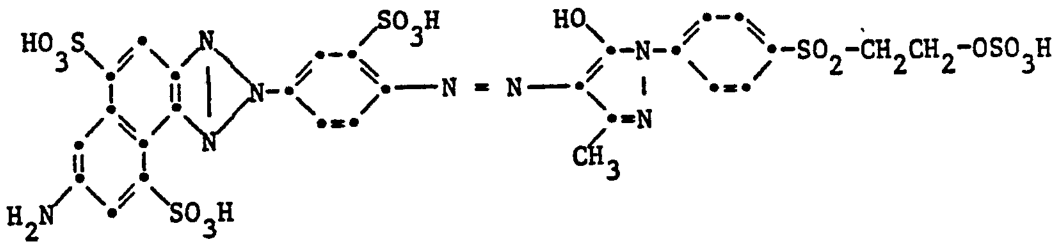

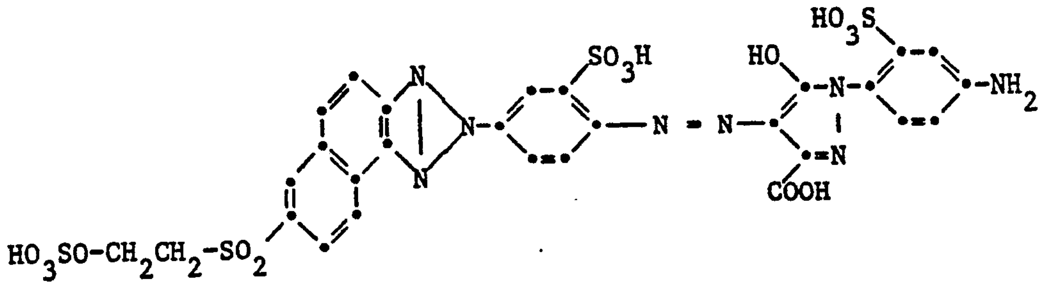

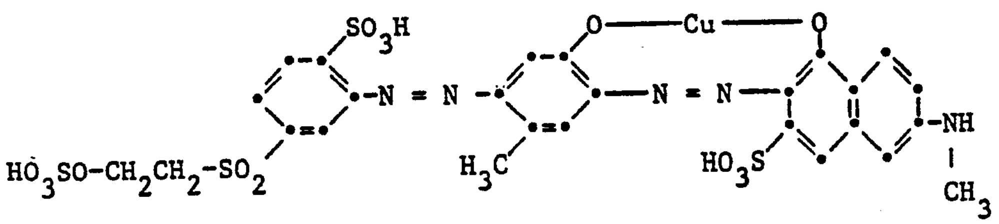

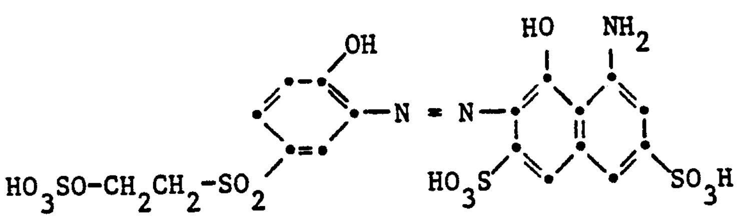

1:2-Chromkomplex

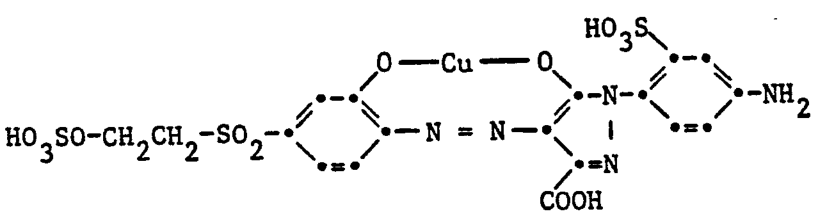

Geht man zur Herstellung der bevorzugten Reaktivfarbstoffe der Formel (1), worin D der Rest eines Azofarbstoffes ist, nicht von den fertigen Aminofarbstoffen, z.B. solchen die weiter vorn beschricben sind, sondern von Farbstoffvorprodukten, d.h. den Diazo- und Kupplungskomponenten aus, müssen beide Komponenten eine acylierbare Aminogruppe, bzw. eine der beiden Komponenten eine acylierbare Aminogruppe und die andere eine Gruppe Y-$SO_2$- aufweisen. Als Diazokomponenten kommen vorwiegend geeignete Verbindungen aus der Aminobenzol- und Aminonaphthalinreihe in Betracht, beispielsweise solchen, die in den Azofarbstoffen der oben angegebenen Formeln enthalten sind, wie 1-Amino-3-β-

sulfatoäthylsulfonylbenzol, 1-Amino-4-β-sulfato-äthylsulfonylbenzol, 1,3-Diamino-benzol-4-sulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6,trimethylbenzol, 1,4-Diamino-2,3,5,6-tetramethylbenzol, 1,3-Diamino-4-nitrobenzol, 4,4'-Diamino-stilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethyl-benzidin, 4,2'-Diaminodiphenyl (Diphenylin), 2,6-Diaminonaphthalin-4,8-disulfonsäure, 1,4-Diaminobenzol-2-sulfonsäure, 1,4-Diamino-benzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 3-(3'- bzw. 4'-Aminobenzoylamino)-1-aminobenzol-6-sulfonsäure, 1-(4'-Aminobenzoylamino)-4-aminobenzol-2,5-disulfonsäure, 1,4-Diaminobenzol-2-carbonsäure, 1,3-Diamino-benzol-4-carbonsäure, 1,2-Diaminobenzol-4-carbonsäure, 1,3-Diamino-benzol-5-carbonsäure, 1,4-Diamino-2-methylbenzol, 4,4'-Diamino-diphenyloxid, 4,4'-Diaminodiphenylharnstoff-2,2'-disulfonsäure, 4,4'-Diaminodiphenyloxyäthan-2,2'-disulfonsäure, 4,4'-Diaminostilben-2,2'-disulfonsäure, 4,4'-Diaminodiphenyläthan-2,2'-disulfonsäure, 1,3,5-Triaminobenzol. Die Kupplungskomponenten sind vor allem geeignete Verbindungen der Aminobenzol- und Naphthalinreihe, z.B. Aniline, N-mono-substituierte Aniline, m-Phenylendiaminderivate, Aminonaphthaline, Naphthole, Aminonaphthalinsulfonsäure, Naphtholsulfonsäuren oder Aminonaphtholsulfonsäuren, ferner Pyrazolone, Aminopyrazole, Aminopyridine, Hydroxypyridine/pyridone, Aminopyrimidine, Hydroxypyrimidine, Indole, Barbitursäurederivate oder Acetoacetarylide. Als Beispiele seien genannt: 3-Aminophenylharnstoff, 1,3-Diaminobenzol-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 2-Amino-5-hydroxy-naphthalin-7-sulfonsäure, 2-Methylamino- bzw. 2-Äthylamino-5-hydroxy-naphthalin-7-sulfonsäure, 2-Amino-5-hydroxynaphthalin-1,7-disulfonsäure, 2-Amino-8-hydroxynaphthalin-6-sulfonsäure, 2-Methylamino-bzw. 2-Äthylamino-8-hydroxynaphthalin-6-sulfonsäure, 2-Amino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-(4'-Aminobenzoyl-amino)-8-hydroxynaphthalin-3,6- bzw. -4,6--disulfonsäure, 1-(3'-Aminobenzoylamino)-8-hydroxynaphthalin-3,6-bzw. -4,6-disulfonsäure, 2-(4'-Amino-3'-sulfophenylamino)-5-hydroxy-naphthalin-7-sulfonsäure, 1-(2'-Sulfo-4'- aminophenyl)-3-carboxy-pyrazolon-(5), 1-(3'-Aminophenyl)-3-methyl-5-pyrazolon, 1-Amino-3-(N,N-bis-β-hydroxyäthylamino)benzol, 1-Amino-3-(N,N-bis-β-sulfatoäthylamino)benzol, 1-Amino-3-(N,N-bis-β-hydroxyäthylamino)-4-methoxy-benzol, 1-Amino-3-sulfobenzylamino-4-chlorbenzol und 1-Amino-3-(N,N-bis-sulfobenzylamino)benzol. Falls eine der beiden Komponenten beide Reaktivgruppen der Formeln (3) und (4) zugleich enthält, oder diese in die betreffende Komponente eingeführt werden können, wie bei den Kupplungskomponenten der Formeln

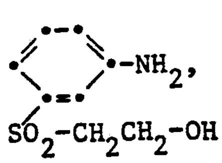 , 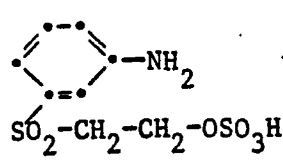 und 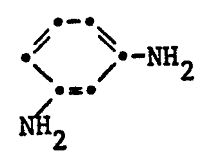

kann die andere Komponente, in diesem Falle die Diazokomponente, auch nichtreaktiv sein, beispielsweise 1-Aminobenzol-2-, -3- oder -4-carbonsäure, Dehydrothio-p-toluidin-sulfonsäure, 1-Amino-3-trifluor-methylbenzol-6-sulfonsäure, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methyl-benzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol -2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfon-säure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetyl-aminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder -8-sulfonsäure, 2-Amino-naphthalin-3,6- oder -5,7-disulfonsäure, 1-Amino-naphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthlin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlor-benzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Acylhalogenide der Formeln (8) und (9):
a,β-Dibrompropionylchlorid,
α,β-Dichlorpropionylchlorid,
α-Bromacryloylchlorid,
α-Chloracryloylchlorid,
und gegebenenfalls auch gleichartig reagierende Halogensäureanhydride,
wie α,β-Dichlorpropionsäure-anhydrid,
4-(β-Chloräthylsulfonyl)-butyrylchlorid
4-Vinylsulfonyl-butyrylchlorid.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser wie Baumwolle, Leinen und Hanf, sowie Zellstoff und regenerierte Cellulose. Die Reaktivfarbstoffe der Formel (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird.

Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten.

Die Fixiergrade sind hoch, und die nicht fixierten Anteile können leicht ausgewaschen werden.

Die Reaktivfarbstoffe der Formel (1) eignen sich besonders zum Färben von Baumwolle nich den Ausziehfärbeverfahren, wobei die Differenz zwischen Ausziehgrad und Fixiergrad bemerkenswert klein, d.h. der Seifverlust sehr gering ist. Die Reaktivfarbstoffe der Formel (1) eignen sich auch besonders zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke zeichnen sich durch klare Nuancen aus. Insbesondere besitzen die Färbungen und Drucke auf Cellulosefasermaterialien eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

In der FR-A-2 034 778 sind Chromkomplexfarbstoffe mit verschiedenen Reaktivresten beschrieben. Gegenüber diesen weisen die beanspruchten Farbstoffe unerwartet viel höhere Fixiergrade im energiesparenden Kaltverweilverfahren auf.

Die nachfolgenden Beispiele dienen zur Erläuterung der Erfindung. Die Temperaturen sind in Celsiusgraden angegeben. Die Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindungen ist in den nachfolgenden Ausführungsbeispielen nicht in allen Fällen beschrieben, sie ergibt sich jedoch ohne weiteres aus der allgemeinen Beschreibung.

**Beispiel 1**: Zu 73,2 Teilen der in 600 Teilen Wasser gelösten

Kupplungskomponente der Formel

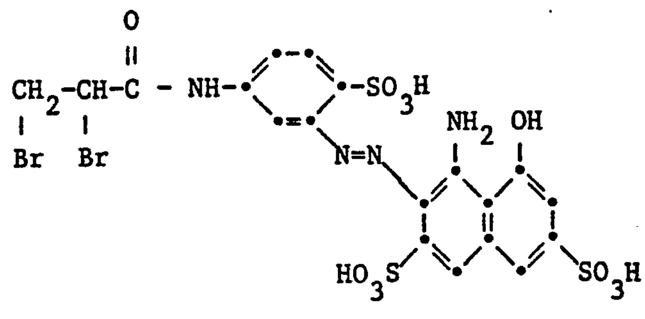

(hergestellt durch saure Kupplung von diazotierter 1-Amino-5-(2,3-dibrompropionylamino)-benzol-2-sulfonsäure auf 1-Amino-8-hydroxy-naphthalin-3,6-disulfonsäure) wird bei 0 bis 5°C eine Mischung von 28,1 Teilen diazotiertem 1-Amino-4-(β-sulfatoäthyl-sulfonyl)-benzol mit 300 Teilen Wasser gegeben. Nach vollständiger Kupplungsreaktion bei pH 5,5 bis 6,5 wird der gebildete Reaktivfarbstoff der Formel

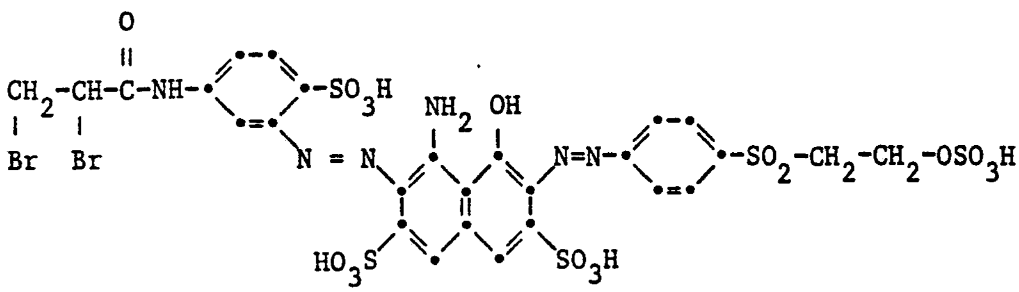

durch Eindampfen oder Gefriertrocknen der Reaktionslösung bei pH 6 isoliert. Er färbt Baumwolle in blauen Tönen.

Weitere wertvolle Reaktivfarbstoffe, die Baumwolle in den in Tabelle 1 Spalte 5 angegebenen Farbtönen färben, werden erhalten, wenn man gemäss den Angaben in Beispiel 1 die in Spalte 2 angegebene diazotierte Diazokomponente sauer auf die in Spalte 3 angegebene Kupplungskomponente kuppelt, und auf die so erhaltene Monoazoverbindung die in Spalte 4 angegebene diazotierte Diazokomponente kuppelt.

Tabelle 1

| Nr. | Diazokomponente | Kupplungskomponente | Diazokomponente | Farbton auf Baumwolle |
|---|---|---|---|---|
| 1 | 1-Amino-5-(2,3-dibrom-propionylamino)-benzol-2-sulfonsäure | 1-Amino-8-hydroxynaphthalin-3,6-disulfonsäure | 1-Amino-4-(β-acetoxy-äthyl-sulfonyl)-benzol | blau |
| 2 | 1-Amino-5-(2,3-dibrom-propionylamino)-benzol-2-sulfonsäure | 1-Amino-8-hydroxynaphthalin-3,6-disulfonsäure | 1-Amino-4-(β-phosphonooxy-äthyl-sulfonyl)-benzol | blau |
| 3 | 1-Amino-5-(2,3-dibrom-propionylamino)-benzol-2-sulfonsäure | 1-Amino-8-hydroxynaphthalin-3,6-disulfonsäure | 1-Amino-4-(β-thiosulfato-äthyl-sulfonyl)-benzol | blau |
| 4 | 1-Amino-4-(2,3-dibrompropionyl-amino)-benzol-2-sulfonsäure | 1-Amino-8-hydroxynaphthalin-3,6-disulfonsäure | 1-Amino-4-(β-sulfato-äthyl-sulfonyl)-benzol | grünstichig blau |
| 5 | 1-Amino-5-(2,3-dibrompropionyl-amino)-benzol-2-sulfonsäure | 1-Amino-8-hydroxynaphthalin-4,6-disulfonsäure | 1-Amino-4-(β-sulfato-äthyl-sulfonyl)-benzol | blau |
| 6 | 1-Amino-4-(β-sulfatoäthyl-sulfonyl)-benzol | 1-Amino-8-hydroxynaphthalin-3,6-disulfonsäure | 1-Amino-5-(2,3-dibrom-propionylamino)-benzol-2-sulfonsäure | blau |
| 7 | 1-Amino-4-(β-acetoxyäthyl-sulfonyl)-benzol | 1-Amino-8-hydroxynaphthalin-3,6-disulfonsäure | 1-Amino-5-(2,3-dibrom-propionylamino)-benzol-2-sulfonsäure | blau |
| 8 | 1-Amino-5-(2,3-dibrompropionyl-amino)-benzol-2-sulfonsäure | 1-Amino-8-hydroxynaphthalin-3,6-disulfonsäure | 1-Amino-5-(4-(β-chloräthyl-sulfonyl)-butyrylamino)-benzol-2-sulfonsäure | blau |

**Tabelle 1**: (Fortsetzung)

| Nr. | Diazokomponente | Kupplungskomponente | Diazokomponente | Farbton auf Baumwolle |
|---|---|---|---|---|
| 9 | 1-Amino-4-(β-sulfatoäthyl-sulfonyl)-benzol | 1-Amino-8-hydroxynaphthalin-3,6-disulfonsäure | 1-Amino-5-(4-(β-chloräthyl-sulfonyl)-butyrylamino)-benzol-2-sulfonsäure | blau |
| 10 | 1-Amino-4-(β-acetoxyäthyl-sulfonyl)-benzol | 1-Amino-8-hydroxynaphthalin-3,6-disulfonsäure | 1-Amino-5-(4-(β-chloräthyl-sulfonyl)-butyrylamino)-benzol-2-sulfonsäure | blau |
| 11 | 1-Amino-4-(β-sulfatoäthyl-sulfonyl)-benzol | 1-Amino-8-hydroxynaphthalin-3,6-disulfonsäure | 1-Amino-5-(2,3-dichlor-propionylamino)-benzol-2-sulfonsäure | blau |
| 12 | 1-Amino-5-(2,3-dichlorpropionyl-amino)-benzol-2-sulfonsäure | 1-Amino-8-hydroxynaphthalin-3,6-disulfonsäure | 1-Amino-4-(β-sulfatoäthyl-sulfonyl)-benzol | blau |
| 13 | 1-Amino-5-(2,3-dibrompropionyl-amino)-benzol-2-sulfonsäure | 1-Amino-8-hydroxynaphthalin-3,6-disulfonsäure | 1-Amino-4-(β-sulfatoäthyl-sulfonyl)-benzol-2-sulfonsäure | blau |
| 14 | 1-Amino-5-(4-(β-chloräthyl-sulfonyl)-butyrylamino)-benzol-2-sulfonsäure | 1-Amino-8-hydroxynaphthalin-3,6-disulfonsäure | 1-Amino-5-(2,3-dibrompropionyl-amino)-benzol-2-sulfonsäure | blau |
| 15 | 1-Amino-4-(β-sulfatoäthylsulfonyl)-benzol-2-sulfonsäure | 1-Amino-8-hydroxynaphthalin-3,6-disulfonsäure | 1-Amino-5-(2,3-dibrompropionyl-amino)-benzol-2-sulfonsäure | blau |

**Tabelle 1** (Fortsetzung)

| Nr. | Diazokomponente | Kupplungskomponente | Diazokomponente | Farbton auf Baumwolle |
|---|---|---|---|---|
| 16 | 1-Amino-5-(4-(β-chloräthyl--sulfonyl)-butyrylamino)-benzol-2-sulfonsäure | 1-Amino-8-hydroxynaphthalin-3,6-disulfonsäure | 1-Amino-4-(β-sulfatoäthyl--sulfonyl)-benzol | blau |
| 17 | 1-Amino-5-(4-(β-chloräthyl--sulfonyl)-butyrylamino)-benzol-2-sulfonsäure | 1-Amino-8-hydroxynaphthalin-3,6-disulfonsäure | 1-Amino-4-(β-sulfatoäthyl--sulfonyl)-benzol-2-sulfonsäure | blau |
| 18 | 1-Amino-4-(β-sulfatoäthyl--sulfonyl)-benzol-2-sulfonsäure | 1-Amino-8-hydroxynaphthalin-3,6-disulfonsäure | 1-Amino-5-(4-(β-chloräthyl-sulfonyl)-butyrylamino)-benzol-2-sulfonsäure | blau |

Aehnliche gute Reaktivfarbstoffe werden erhalten, wenn man bei den Beispielen der Tabelle 1 statt der 1-Amino-8-hydroxynaphthalin-3,6- oder -4,6-disulfonsäure die 2-Amino-5-hydroxynaphthalin-7-sulfonsäure oder 1-Amino-8-hydroxynaphthalin-4-sulfonsäure als Kupplungskomponente verwendet, und die beiden Diazokomponenten, wie in Beispiel 1 angegeben, in saurer und in neutraler Lösung auf diese Kupplungskomponenten kuppelt.

**Beispiel 2**: 25,9 Teile der aminogruppenhaltigen Kupplungskomponente

der Formel

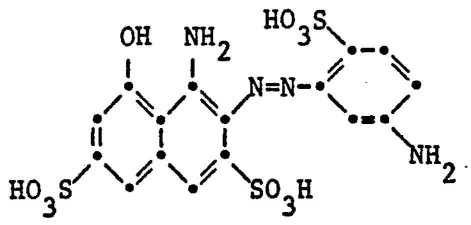

werden in 500 Teilen Wasser neutral gelöst und die Lösung auf 10°C abgekühlt. Bei dieser Temperatur werden 13,8 Teile 2,3-Dibrom-propionylchlorid innert 20 Minuten zugetropft, wobei der pH der Reaktionslösung durch gleichzeitige Zugabe von 2n Natriumhydroxydlösung bei 6,5 bis 7,0 gehalten wird. Nach vollständiger Reaktion wird bei 0 bis 5°C eine Mischung von 14,1 Teilen diazotiertem 1-Amino-4-(β-sulfatoäthylsulfonyl)-benzol mit 150 Teilen Wasser zugegeben. Nach vollständiger Kupplungsreaktion bei pH 5,5 bis 6,5 hat sich derselbe Reaktivfarbstoff wie in Beispiel 1 gebildet.

Weitere wertvolle Reaktivfarbstoffe, die Baumwolle in den in Tabelle 2 Spalte 5 angegebenen Farbtönen färben werden erhalten, wenn man gemäss den Angaben in Beispiel 2 die in Spalte 2 angegebene aminogruppenhaltige Kupplungskomponete mit dem in Spalte 3 angegebenen Acylierungsmittel umsetzt und auf das so erhaltene Zwischenprodukt die in Spalte 4 angegebene diazotierte Diazokomponente kuppelt.

Tabelle 2:

| Nr. | Kupplungskomponente | Acylierungsmittel | Diazokomponente | Farbton auf Baumwolle |
|---|---|---|---|---|
| 1 | 1-Amino-8-hydroxy-2-(5'-amino-2'-sulfophenylazo)-naphthalin-3,6-disulfonsäure | 2,3-Dibrompropionylchlorid | 1-Amino-4-(β-acetoxyäthyl--sulfonyl)-benzol | blau |
| 2 | 1-Amino-8-hydroxy-2-(5'-amino-2'-sulfophenylazo)-naphthalin-3,6-disulfonsäure | 2,3-Dibrompropionylchlorid | 1-Amino-4-(β-phosphonooxy-äthyl-sulfonyl)-benzol | blau |
| 3 | 1-Amino-8-hydroxy-2-(5'-amino-2'-sulfophenylazo)-naphthalin-3,6-disulfonsäure | 4-(β-Chloräthyl-sulfonyl)--butyrylchlorid | 1-Amino-4-(β-sulfatoäthyl-sulfonyl)-benzol | blau |
| 4 | 2-Amino-5-hydroxy-naphthalin-7-sulfonsäure | 2,3-Dibrompropionylchlorid | 1-Amino-4-(β-sulfatoäthyl-sulfonyl)-benzol | orange |
| 5 | 2-Amino-5-hydroxy-naphthalin-7-sulfonsäure | 4-(β-Chloräthyl-sulfonyl)--butyrylchlorid | 1-Amino-4-(β-sulfatoäthyl-sulfonyl)-benzol | orange |
| 6 | 2-Amino-5-hydroxy-naphthalin-7-sulfonsäure | 2,3-Dibrompropionylchlorid | 1-Amino-5-(4-(β-chloräthyl--sulfonyl)-butyrylamino)-benzol-2-sulfonsäure | orange |
| 7 | 3-Amino-5-hydroxy-naphthalin-7-sulfonsäure | 2,3-Dibrompropionylchlorid | 1-Amino-4-(β-sulfatoäthyl-sulfonyl)-benzol | rotstichig orange |
| 8 | 3-Amino-5-hydroxy-naphthalin-7-sulfonsäure | 4-(β-Chloräthyl-sulfonyl)--butyrylchlorid | 1-Amino-4-(β-sulfatoäthyl-sulfonyl)-benzol | rotstichig orange |

**Tabelle 2**: (Fortsetzung)

| Nr. | Kupplungskomponente | Acylierungsmittel | Diazokomponente | Farbton auf Baumwolle |
|---|---|---|---|---|
| 9 | 3-Amino-5-hydroxy-naphthalin-7-sulfonsäure | 2,3-Dibrompropionylchlorid | 1-Amino-5-(4-(β-chloräthyl-sulfonyl)-butyrylamino)-benzol-2-sulfonsäure | rotstichig orange |
| 10 | 1-(4'-Aminobenzoylamino)-8-hydroxynaphthalin-3,6-disulfonsäure | 2,3-Dibrompropionylchlorid | 1-Amino-4-(β-sulfatoäthyl-sulfonyl)-benzol | blaustichig rot |
| 11 | 1-(4'-Aminobenzoylamino)-8-hydroxynaphthalin-3,6-disulfonsäure | 4-(β-Chloräthyl-sulfonyl)-butyrylchlorid | 1-Amino-4-(β-sulfatoäthyl-sulfonyl)-benzol | blaustichig rot |
| 12 | 1-(4'-Aminobenzoylamino)-8-hydroxynaphthalin-3,6-disulfonsäure | 2,3-Dibrompropionylchlorid | 1-Amino-5-(4-(β-chloräthyl-sulfonyl)-butyrylamino)-benzol-2-sulfonsäure | blaustichig rot |
| 13 | 1-(3'-Aminobenzoylamino)-8-hydroxynaphthalin-3,6-disulfonsäure | 2,3-Dibrompropionylchlorid | 1-Amino-4-(β-sulfatoäthyl-sulfonyl)-benzol | blaustichig rot |
| 14 | 1-(3'-Aminobenzoylamino)-8-hydroxynaphthalin-3,6-disulfonsäure | 4-(β-Chloräthyl-sulfonyl)-butyrylchlorid | 1-Amino-4-(β-sulfatoäthyl-sulfonyl)-benzol | blaustichig rot |
| 15 | 1-(3'-Aminobenzoylamino)-8-hydroxynaphthalin-3,6-disulfonsäure | 2,3-Dibrompropionylchlorid | 1-Amino-5-(4-(β-chloräthyl-sulfonyl)-butyrylamino)-benzol-2-sulfonsäure | blaustichig rot |

**Tabelle 2**: (Fortsetzung)

| Nr. | Kupplungskomponente | Acylierungsmittel | Diazokomponente | Farbton auf Baumwolle |
|---|---|---|---|---|
| 16 | 1-Amino-3-(N,N-di-(β-hydroxy-äthyl)-amino)-benzol | 2,3-Dibrompropionylchlorid | 1-Amino-4-(β-sulfatoäthyl-sulfonyl)-benzol | rotstichig orange |
| 17 | 1-Amino-3-(N,N-di-(β-sulfato-äthyl)-amino)-benzol | 2,3-Dibrompropionylchlorid | 1-Amino-4-(β-sulfatoäthyl-sulfonyl)-benzol | orange |
| 18 | 1-Amino-3-(N,N-di-(β-sulfato-äthyl)-amino)-benzol | 4-(β-Chloräthyl-sulfonyl)--butyrylchlorid | 1-Amino-4-(β-sulfatoäthyl-sulfonyl)-benzol | orange |
| 19 | 1-Amino-3-(N,N-di-(β-sulfato-äthyl)-amino)-benzol | 2,3-Dibrompropionylchlorid | 1-Amino-5-(4-(β-chloräthyl--sulfonyl)-butyrylamino)-benzol-2-sulfonsäure | orange |
| 20 | 1-Amino-8-hydroxynaphthalin-3,6-disulfonsäure | 2,3-Dibrompropionylchlorid | 1-Amino-4-(β-sulfatoäthyl--sulfonyl)-benzol | rot |
| 21 | 1-Amino-8-hydroxynaphthalin-3,6-disulfonsäure | 2,3-Dibrompropionylchlorid | 1-Amino-4-(β-sulfatoäthyl--sulfonyl)-benzol-2-sulfon-säure | rot |
| 22 | 1-Amino-8-hydroxynaphthalin-3,6-disulfonsäure | 2,3-Dibrompropionylchlorid | 1-Amino-5-(4-(β-chloräthyl--sulfonyl)-butyrylamino)--benzol-2-sulfonsäure | rot |
| 23 | 1-Amino-8-hydroxynaphthalin-3,6-disulfonsäure | 2,3-Dibrompropionylchlorid | 1-Amino-3-(β-sulfatoäthyl--sulfonyl)-benzol | rot |

Tabelle 2: (Fortsetzung)

| Nr. | Diazokomponente | Acylierungsmittel | Diazokomponente | Farbton auf Baumwolle |
|---|---|---|---|---|
| 24 | 1-Amino-8-hydroxynaphthalin-3,6-disulfonsäure | 4-(β-Chloräthyl-sulfonyl)-butyrylchlorid | 1-Amino-5-(2,3-dibrompropionyl-amino)-benzol-2-sulfonsäure | rot |
| 25 | 1-Amino-8-hydroxynaphthalin-3,6-disulfonsäure | 4-(β-Chloräthyl-sulfonyl)-butyrylchlorid | 1-Amino-4-(β-sulfatoäthyl-sulfonyl)-benzol | rot |
| 26 | 1-Amino-8-hydroxynaphthalin-3,6-disulfonsäure | 4-(β-Chloräthyl-sulfonyl)-butyrylchlorid | 1-Amino-4-(β-sulfatoäthyl-sulfonyl)-benzol-2-sulfonsäure | rot |
| 27 | 1-Amino-8-hydroxynaphthalin-3,6-disulfonsäure | 4-(β-Chloräthyl-sulfonyl)-butyrylchlorid | 1-Amino-3-(β-sulfatoäthyl-sulfonyl)-benzol | rot |
| 28 | 1-Amino-8-hydroxynaphthalin-3,6-disulfonsäure | 2,3-Dichlorpropionylchlorid | 1-Amino-4-(β-sulfatoäthyl-sulfonyl)-benzol | rot |
| 29 | 1-Amino-8-hydroxynaphthalin-3,6-disulfonsäure | 2,3-Dichlorpropionylchlorid | 1-Amino-5-(4-(β-chloräthyl-sulfonyl)-butyrylamino)-benzol-2-sulfonsäure | rot |
| 30 | 1-Amino-8-hydroxynaphthalin-3,6-disulfonsäure | 2,3-Dichlorpropionylchlorid | 1-Amino-4-(β-sulfatoäthyl-sulfonyl)-benzol-2-sulfonsäure | rot |
| 31 | 1-Amino-8-hydroxynaphthalin-3,6-disulfonsäure | 2,3-Dichlorpropionylchlorid | 1-Amino-3-(β-sulfatoäthyl-sulfonyl)-benzol | rot |
| 32 | 2-Amino-5-hydroxynaphthalin-7-sulfonsäure | 2,3-Dibrompropionylchlorid | 1-Amino-4-(β-sulfatoäthyl-sulfonyl)-benzol-2-sulfonsäure | orange |

**Tabelle 2**: (Fortsetzung)

| Nr. | Diazokomponente | Acylierungsmittel | Diazokomponente | Farbton auf Baumwolle |
|---|---|---|---|---|
| 33 | 2-Amino-5-hydroxynaphthalin-7-sulfonsäure | 2,3-Dibrompropionylchlorid | 1-Amino-3-(β-sulfatoäthyl--sulfonyl)-benzol | orange |
| 34 | 2-Amino-5-hydroxynaphthalin-7-sulfonsäure | 4-(β-Chloräthyl-sulfonyl)--butyrylchlorid | 1-Amino-5-(2,3-dibrompropionyl-amino)-benzol-2-sulfonsäure | orange |
| 35 | 2-Amino-5-hydroxynaphthalin-7-sulfonsäure | 4-(β-Chloräthyl-sulfonyl)--butyrylchlorid | 1-Amino-4-(β-sulfatoäthyl--sulfonyl)-benzol-2-sulfonsäure | orange |
| 36 | 2-Amino-5-hydroxynaphthalin-7-sulfonsäure | 4-(β-Chloräthyl-sulfonyl)--butyrylchlorid | 1-Amino-3-(β-sulfatoäthyl--sulfonyl)-benzol | orange |
| 37 | 2-Amino-5-hydroxynaphthalin-7-sulfonsäure | 2,3-Dichlorpropionylchlorid | 1-Amino-4-(β-sulfatoäthyl--sulfonyl)-benzol | orange |
| 38 | 2-Amino-5-hydroxynaphthalin-7-sulfonsäure | 2,3-Dichlorpropionylchlorid | 1-Amino-5-(4-(β-chloräthyl--sulfonyl)-butyrylamino)-benzol-2-sulfonsäure | orange |
| 39 | 2-Amino-5-hydroxynaphthalin-7-sulfonsäure | 2,3-Dichlorpropionylchlorid | 1-Amino-4-(β-sulfatoäthyl-sulfonyl)-benzol-2-sulfonsäure | orange |
| 40 | 2-Amino-5-hydroxynaphthalin-7-sulfonsäure | 2,3-Dichlorpropionylchlorid | 1-Amino-3-(β-sulfatoäthyl-sulfonyl)-benzol | orange |
| 41 | 3-Amino-5-hydroxynaphthalin-7-sulfonsäure | 2,3-Dibrompropionylchlorid | 1-Amino-4-(β-sulfatoäthyl-sulfonyl)-benzol-2-sulfonsäure | orange |

Tabelle 2: (Fortsetzung)

| Nr. | Diazokomponente | Acylierungsmittel | Diazokomponente | Farbton auf Baumwolle |
|---|---|---|---|---|
| 42 | 3-Amino-5-hydroxynaphthalin-7-sulfonsäure | 2,3-Dibrompropionylchlorid | 1-Amino-3-(β-sulfatoäthyl--sulfonyl)-benzol | orange |
| 43 | 3-Amino-5-hydroxynaphthalin--sulfonsäure | 4-(β-Chloräthyl-sulfonyl)--butyrylchlorid | 1-Amino-5-(2,3-dibrompropionyl-amino)-benzol-2-sulfonsäure | orange |
| 44 | 3-Amino-5-hydroxynaphthalin-7-sulfonsäure | 4-(β-Chloräthyl-sulfonyl)--butyrylchlorid | 1-Amino-4-(β-sulfatoäthyl--sulfonyl)-benzol-2-sulfonsäure | orange |
| 45 | 3-Amino-5-hydroxynaphthalin-7-sulfonsäure | 4-(β-Chloräthyl-sulfonyl)--butyrylchlorid | 1-Amino-3-(β-sulfatoäthyl--sulfonyl)-benzol | orange |
| 46 | 3-Amino-5-hydroxynaphthalin-7-sulfonsäure | 2,3-Dichlorpropionylchlorid | 1-Amino-4-(β-sulfatoäthyl--sulfonyl)-benzol | orange |
| 47 | 3-Amino-5-hydroxynaphthalin-7-sulfonsäure | 2,3-Dichlorpropionylchlorid | 1-Amino-5-(4-(β-chloräthyl--sulfonyl)-butyrylamino)-ben-zol-2-sulfonsäure | orange |
| 48 | 3-Amino-5-hydroxynaphthalin-7-sulfonsäure | 2,3-Dichlorpropionylchlorid | 1-Amino-4-(β-sulfatoäthyl--sulfonyl)-benzol-2-sulfonsäure | orange |
| 49 | 3-Amino-5-hydroxynaphthalin-7-sulfonsäure | 2,3-Dichlorpropionylchlorid | 1-Amino-3-(β-sulfatoäthyl--sulfonyl)-benzol | orange |

**Tabelle 2:** (Fortsetzung)

| Nr. | Diazokomponente | Acylierungsmittel | Diazokomponente | Farbton auf Baumwolle |
|---|---|---|---|---|
| 50 | 1,3-Diaminobenzol-4-sulfonsäure | 2,3-Dichlorpropionylchlorid | 1-Amino-5-(4-(β-chloräthyl-sulfonyl)-butyrylamino)-benzol-2-sulfonsäure | rotstichig gelb |
| 51 | 1,3-Diaminobenzol-4-sulfonsäure | 4-(β-Chloräthyl-sulfonyl)-butyrylchlorid | 1-Amino-5-(2,3-dibrompropionylamino)-benzol-2-sulfonsäure | rotstichig gelb |
| 52 | 1,3-Diaminobenzol-4-sulfonsäure | 4-(β-Chloräthyl-sulfonyl)-butyrylchlorid | 1-Amino-4-(β-sulfatoäthyl-sulfonyl)-benzol | rotstichig gelb |

Bei einigen der genannten Farbstoffe werden weitere anwendungstechnische Vorteile erzielt, wenn man eine oder zwei ihrer Reaktivgruppen in die Vinylsulfonylgruppe bzw. α-Halogenacryloyl-Gruppe umwandelt, beispielsweise nach einer der beiden folgenden Vorschriften:

a) Eine ca. 10%ige, wässrige Lösung des Farbstoffes wird bei 20°C auf pH 9 gestellt. Indem die freigesetzte

Säure laufend durch Zugabe von 2 n Natriumhydroxydlösung neutralisiert wird, wird der pH der Reaktionslösung bei 9 gehalten. Nach Zugabe eines Aequivalentes der 2 n Natriumhydroxydlösung wird die Reaktionslösung auf pH 6,5-7,0 gestellt und der gebildete Reaktivfarbstoff wie üblich isoliert. Dabei hat eine Reaktivgruppe des Farbstoffes zu ihrer Vinylsulfonyl-Gruppe bzw. beide Reaktivgruppen teilweise zu ihren Vinylsulfonyl- bzw. α-Halogenacryloyl-Gruppen eliminiert.

b) Eine ca. 10%ige, wässrige Lösung des Farbstoffes wird bei 20°C auf pH 10 gestellt. Indem die freigesetzte Säure laufend durch Zugabe von 2n Natriumhydroxydlösung neutralisiert wird, wird der pH der Reaktionslösung bei 10 gehalten. Nach vollständiger Eliminierungsreaktion wird der gebildete Reaktivfarbstoff bei pH 7 ausgesalzen, filtriert, gewaschen und im Vakuum getrocknet. Dabei haben beide Reaktivgruppen des Farbstoffes zu ihren Vinylsulfonyl- bzw. α-Halogenacryloyl-Gruppen eliminiert.

**Färbevorschrift I:**

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten.

Danach wird die gefärbte Ware gespült, während einer Viertelstunde mit einem nichtionogenen Waschmittel kochend geseift, nochmals gespült und getrocknet.

**Färbevorschrift II:**

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

**Färbevorschrift III:**

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

**Färbevorschrift IV:**

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

**Färbevorschrift V:**

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 10 Stunden bei

Raumtemperatur gelagert. Danach wird die gefärbte Ware gespült, während einer Viertelstunde mit einem nichtionogenen Waschmittel kochend geseift, nochmals gespült und getrocknet.

**Färbevorschrift VI:**

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20°C warmen Lösung, die pro Liter 4 Gramm Natriumhydroxyd und 300 Gramm Natriumchlorid enthält, quetscht auf 75% Gewichtszunahme ab, dämpft die Färbung während 30 bis 60 Sekunden bei 100 bis 102°C spült, seift während einer Viertelstunde in einer 0,3%igen kochenden Lösung eines nicht-ionogenen Waschmittels, spült und trocknet.

**Färbevorschrift VII:**

4 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung, die pro Liter 120 g Natriumchlorid, 40 g kalziniertes Soda und 100 g Harnstoff enthält. Mit der erhaltenen Lösung wird ein Baumwollgewebe foulardiert, so dass es um 70% seines Gewichtes zunimmt. Das so erhaltene, feuchte Baumwollgewebe wird 90 Sekunden bei 102°C in gesättigtem Dampf gedämpft. Danach wird die gefärbte Ware gespült, während einer Viertelstunde mit einem nichtionogenen Waschmittel kochend geseift, nochmals gespült und getrocknet.

**Färbevorschrift VIII:**

6 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung, die pro Liter 20 g kalziniertes Soda und 400 g Harnstoff enthält. Mit der erhaltenen Lösung wird ein Baumwollgewebe foulardiert, so dass es um 70% seines Gewichtes zunimmt, und dann getrocknet. Das so erhaltene Baumwollgewebe wird 90 Sekunden bei 140°C thermofixiert. Danach wird die gefärbte Ware gespült, während einer Viertelstunde mit einem nichtionogenen Waschmittel kochend geseift, nochmals gespült und getrocknet.

**Färbevorschrift IX:**

4 Teile des gemäss Beispiel 1 erhaltenen Reaktivfarbstoffes werden unter Zusatz von 1 Teil m-nitrobenzolsulfonsaurem Natrium in 50 Teilen Wasser gelöst. Dazu gibt man 50 Teile einer Lösung, die pro Liter 11,2 g Natriumhydroxyd, 0,04 Liter Wasserglas (38° Bé) und 100 g Harnstoff enthält. Mit der erhaltenen Lösung wird ein Baumwollgewebe imprägniert, so dass es um 70% seines Gewichtes zunimmt, und dann getrocknet. Das so erhaltene Baumwollgewebe wird 30 bis 60 Sekunden bei 102°C in gesättigtem Dampf gedämpft. Danach wird die gefärbte Ware gespült, während einer Viertelstunde mit einem nichtionogenen Waschmittel kochend geseift, nochmals gespült und getrocknet.

**Druckvorschrift I:**

3 Teile des gemäss Beispiel 1 erhaltenen Reaktivfarbstoffes werden unter schnellem Rühren in 100 Teile einer Stammverdickung, enthaltend 50 Teile 5-%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

**Druckvorschrift II:**

5 Teile des gemäss Beispiel 1 erhaltenen Reaktivfarbstoffes werden unter schnellem Rühren in 100 Teile einer Stammverdickung, enthaltend 50 Teile 5-%ige Natriumalginatverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

$$Y-SO_2-\left[A-CO-\underset{\displaystyle R_1}{\underset{|}{N}}-\right]_n D-\underset{\displaystyle R_2}{\underset{|}{N}}-CO-Z \qquad (1),$$

worin D der Rest eines Farbstoffes der Mono- oder Polyazo-, Metall-komplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbimid-Reihe, $R_1$ und $R_2$ unabhängig voneinander Wasserstoff oder der Rest eines gegebenenfalls substituierten Kohlenwasserstoffs, A ein gegebenefalls substituiertes aliphatisches oder aromatisches Brückenglied, n = 0 oder 1, Y ein Rest $-CH{=}CH_2$ oder $-CH_2CH_2-X$, X ein unter alkalischen Bedingungen abspaltbarer anorganischer oder organischer Rest, Z ein Rest

$$-\underset{\displaystyle Hal}{\underset{|}{CH}}-CH_2-Hal$$

$$-\underset{\displaystyle Hal}{\underset{|}{C}}{=}CH_2$$

$$-(CH_2)_{3-5}-SO_2-CH_2CH_2-Hal$$

oder

$$-(CH_2)_{3-5}-SO_2-CH{=}CH_2$$

und Hal Chlor oder Brom ist, wobei, wenn n = 1 ist, Z keiner der beiden für Z zuletztgenannten Reste sein darf, ausgenommen 2-(α-Brom-acryloylamino)-4-amino-4'-(β-sulfatoäthylsulfonyl)-1,1'-azobenzol-5-sulfonsäure.

2. Reaktivfarbstoffe gemäss Anspruch 1, worin D der Rest eines Mono- oder Disazofarbstoffes oder eines Metallkomplexazofarbstoffes ist.

3. Reaktivfarbstoffe gemäss Anspruch 1, worin D der Rest eines Anthrachinonfarbstoffes ist.

4. Reaktivfarbstoffe gemäss Anspruch 1, worin D der Rest eines Formazanfarbstoffes ist.

5. Reaktivfarbstoffe gemäss Anspruch 1, worin D der Rest eines Dioxazinfarbstoffes ist.

6. Reaktivfarbstoffe gemäss Anspruch 2, worin D der Rest eines 1:1-Kupferkomplexazofarbstoffes der Benzol- oder Napthalinreihe ist, und das Kupferatom an je eine metallisierbare Gruppe beidseitig in ortho-Stellung zur Azobrücke gebunden ist.

7. Reaktivfarbstoffe gemäss Anspruch 2, worin $R_1$ und $R_2$ unabhängig voneinander Wasserstoff oder Methyl ist.

8. Reaktivfarbstoffe gemäss Anspruch 7, der Formel

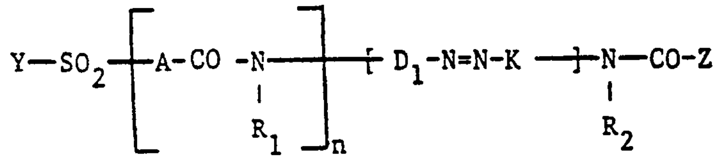 (2),

worin $D_1$ der Rest einer Diazokomponente der Benzol- oder Naphthalinreihe, K der Rest einer Kupplungskomponente der Benzol- oder Naphthalinreihe oder der heterocyclischen Reihe, $R_1$ und $R_2$ unabhängig voneinander Wasserstoff oder Methyl, A ein Brückenglied $-(CH_2)-_{3\text{-}5}$, und n = 0 oder 1 ist, Y und Z die für Anspruch 7 geltenden Bedeutungen haben und die Reste

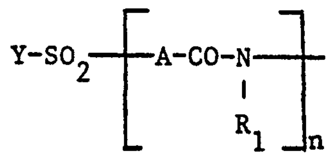 (3)

und

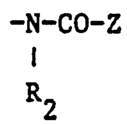 (4)

alternativ an die Diazokomponente und die Kupplungskomponente gebunden sind, oder beide Reste der Formeln (3) und (4) an die Diazo- oder beide an die Kupplungskomponente gebunden sind.

9. Reaktivfarbstoffe gemäss Anspruch 8, worin n = 1, A Propylen, Y β-Sulfatoäthyl, Vinyl, β-Acetoxyäthyl, β-Phosphonooxyäthyl, β-Thiosulfatoäthyl oder β-Chloräthyl, und Z α,β-Dibromäthyl oder α-Bromvinyl ist.

10. Reaktivfarbstoffe gemäss Anspruch 8, worin n = 0, Y β-Sulfatoäthyl, Vinyl, β-Acetoxyäthyl, β-Phosphonooxyäthyl, β-Thiosulfatoäthyl oder β-Chloräthyl, und Z α,β-Dibromäthyl, α-Bromvinyl, 3-(β-Chloräthylsulfonyl)-propyl oder 3-Vinylsulfonylpropyl ist.

11. Verfahren zur Herstellung von Reaktivfarbstoffen gemäss Anspruch 1, dadurch gekennzeichnet, dass man in Farbstoffe der Formel

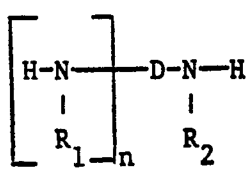 (5)

Reste der Formeln

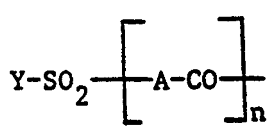 (6)

und

-CO-Z (7)

in an sich bekannter Weise einführt, oder dass man Vorprodukte von Farbstoffen der Formel (5) verwendet, welche bereits Reste der Formel (6) bzw. (7) enthalten, und diese in an sich bekannte Weise in die gewünschten Endfarbstoffe der Formel (1) überführt.

12. Verwendung der Reaktivfarbstoffe gemäss Anspruch 1 zum Färben oder Bedrucken.

13. Verwendung gemäss Anspruch 12 zum Färben oder Bedrucken von Cellulosefasern.

## Claims

1. A reactive dye of the formula

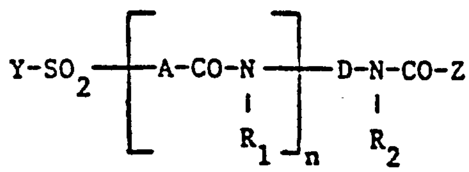

(1)

in which D is the radical of a dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarbimide series, each of $R_1$ and $R_2$ independently of the other is hydrogen or the radical of an unsubstituted or substituted hydrocarbon, A is an unsubstituted or substituted aliphatic or aromatic bridge member, n is 0 or 1, Y is a $-CH=CH_2$ or $-CH_2CH_2-X$ radical, X is an inorganic or organic radical detachable under alkaline conditions, Z is a radical of the formula

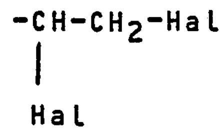

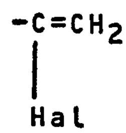

$-(CH_2)_{3-5}SO_2-CH_2CH_2-Hal$

or

$-(CH_2)_{3-5}SO_2-CH=CH_2$

and Hal is chlorine or bromine, with the proviso that if n is 1, Z may not be either of the two last-named radicals, with the exception of 2-(α-bromoacryloylamino)-4-amino-4'-(β-sulfatoethylsulfonyl)-1, 1'-azobenzene-5-sulfonic acid.

2. A reactive dye according to claim 1, wherein D is the radical of a monoazo or disazo dye or of a metal complex azo dye.

3. A reactive dye according to claim 1, wherein D is the radical of an anthraquinone dye.

4. A reactive dye according to claim 1, wherein D is the radical of a formazan dye.

5. A reactive dye according to claim 1, wherein D is the radical of a dioxazine dye.

6. A reactive dye according to claim 2, wherein D is the radical of a 1:1 copper complex azo dye of the benzene or naphthalene series, and each copper atom is bonded on either side to a metallisable group in orthoposition relative to the azo bridge.

7. A reactive dye according to claim 2, wherein each of $R_1$ and $R_2$ independently of the other is hydrogen or methyl.

8. A reactive dye according to claim 7 of the formula

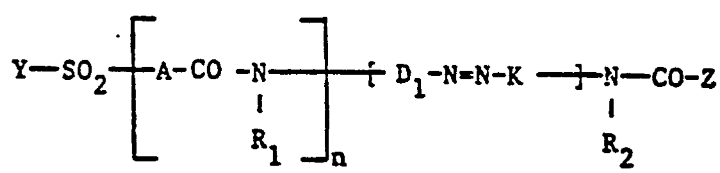

(2)

in which $D_1$ is the radical of a diazo component of the benzene or naphthalene series, K is the radical of a coupling component of the benzene or naphthalene series or of the heterocyclic series, each of $R_1$ and $R_2$ independently of the other is hydrogen or methyl, A is a bridge member of the formula

$$-(CH_2)_{3-5}-,$$

n is 0 or 1, Y and Z are as defined in claim 7, and one of the radicals

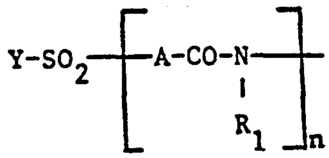 (3)

and

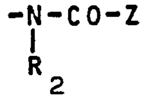 (4)

is bonded to the diazo component and the other is bonded to the coupling component, or the two radicals of the formulae (3) and (4) are both bonded to the diazo or the coupling component.

9. A reactive dye according to claim 8, wherein n is 1, A is propylene, Y is β-sulfatoethyl, vinyl, β-acetoxyethyl, β-phosphonooxyethyl, β-thiosulfatoethyl or β-chloroethyl, and Z is α,β-dibromoethyl or α-bromovinyl.

10. A reactive dye according to claim 8, wherein n is 0, Y is β-sulfatoethyl, vinyl, β-acetoxyethyl, β-phosphonooxyethyl, β-thiosulfatoethyl or β-chloroethyl, and Z is α,β-dibromoethyl, α-bromovinyl, 3-(β-chloroethylsulfonyl)-propyl or 3-vinylsulfonylpropyl.

11. A process for preparing a reactive dye according to claim 1, which comprises introducing into dyes of the formula

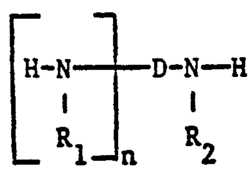 (5)

radicals of the formulae

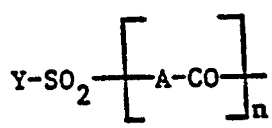 (6)

and

-CO-Z (7)

in a manner known per se, or using precursors of dyes of the formula (5) which already contain radicals of the formulae (6) and (7), and converting these precursors in a manner known per se into the desired final dyes of the formula (1).

12. Use of a reactive dye according to claim 1 for dyeing or printing.

13. Use according to claim 12 for dyeing or printing cellulose fibres.

**Revendications**

1. Colorants réactifs de formule

$$Y-SO_2-\left[A-CO-\underset{R_1}{\underset{|}{N}}\right]_n-D-\underset{R_2}{\underset{|}{N}}-CO-Z \qquad (1),$$

dans laquelle D est le résidu d'un colorant de la série mono- ou polyazoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone ou pérylènetétracarbimide, $R_1$ et $R_2$, indépendamment l'un de l'autre, désignent un hydrogène ou le résidu d'un hydrocarbure éventuellement substitué, A est un chaînon pontant aliphatique ou aromatique, éventuellement substitué, n = 0 ou 1, Y est un radical $-CH=CH_2$ ou $-CH_2CH_2-X$, X est un radical inorganique ou organique, pouvant être éliminé dans des conditions alcalines, Z est un radical

$$-\underset{Hal}{\underset{|}{CH}}-CH_2-Hal$$

$$-\underset{Hal}{\underset{|}{C}}=CH_2$$

$$-(CH_2)_{3-5}-SO_2-CH_2CH_2-Hal$$

ou

$$-(CH_2)_{3-5}-SO_2-CH=CH_2$$

et Hal est un atome de chlore ou de brome , Z, quand n = 1, ne devant être aucun des deux radicaux nommés en dernier pour Z; à l'exclusion de l'acide 2-(α-bromo-acryloylamino)-4-amino-4'-(β-sulfatoéthylsulfonyl)-1,1'-azobenzène-5-sulfonique.

2. Colorants réactifs selon la revendication 1, dans lesquels D est le résidu d'un colorant mono- ou disazoïque, ou d'un colorant azoïque à complexe métallique.

3. Colorants réactifs selon la revendication 1, dans lesquels D est le résidu d'un colorant anthraquinone.

4. Colorants réactifs selon la revendication 1, dans lesquels D est le résidu d'un colorant formazan.

5. Colorants réactifs selon la revendication 1, dans lesquels D est le résidu d'un colorant dioxazine.

6. Colorants réactifs selon la revendication 2, dans lesquels D est le résidu d'un colorant azoïque à complexe de cuivre 1:1 de la série du benzène ou du naphtalène, et l'atome de cuivre est fixé à deux groupes métallables se trouvant, un de chaque côté, en position ortho par rapport au pont azoïque.

7. Colorants réactifs selon la revendication 2, dans lesquels $R_1$ et $R_2$, indépendamment l'un de l'autre, sont chacun un hydrogène ou le radical méthyle.

8. Colorants réactifs selon la revendication 7, de formule

$$Y-SO_2-\left[A-CO-\underset{R_1}{\underset{|}{N}}\right]_n-\left(D_1-N=N-K\right)-\underset{R_2}{\underset{|}{N}}-CO-Z \qquad (2),$$

dans laquelle $D_1$ est le résidu d'un composant diazo de la série du benzène ou du naphtalène, K est le résidu d'un composant de copulation de la série du benzène ou du naphtalène, ou encore de la série hétérocyclique, $R_1$ et $R_2$, indépendamment l'un de l'autre, sont chacun un hydrogène ou le radical méthyle, A est un chaînon pontant $-(CH_2)_{3-5}-$, et n = 0 ou 1, Y et Z ont les significations données pour la revendication 7, et les radicaux

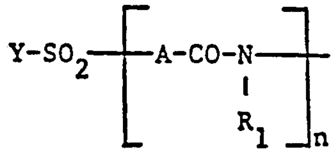

(3)

et

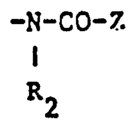

(4)

sont fixés l'un au composant diazo et l'autre au composant de copulation, ou bien les deux radicaux de formules (3) et (4) sont fixés au composant diazo, ou bien les deux sont fixés au composant de copulation.

9. Colorants réactifs selon la revendication 8, dans lesquels n = 1, A est un enchaînement propylène, Y est le radical β-sulfatoéthyle, vinyle, β-acétoxyéthyle, β-phosphonooxyéthyle, β-thiosulfatoéthyle ou β-chloroéthyle, et Z est le radical α,β-dibromoéthyle ou α-bromovinyle.

10. Colorants réactifs selon la revendication 8, dans lesquels n = 0, Y est le radical β-sulfatoéthyle, vinyle, β-acétoxyéthyle, β-phosphonooxyéthyle, β-thiosulfatoéthyle ou β-chloroéthyle, et Z est le radical α,β-dibromoéthyle, α-bromovinyle, 3-(β-chloroéthylsulfonyl)-propyle ou 3-vinyl-sulfonylpropyle.

11. Procédé pour la préparation de colorants réactifs selon la revendication 1, caractérisé en ce qu'on introduit d'une manière connue en soi, dans des colorants de formule

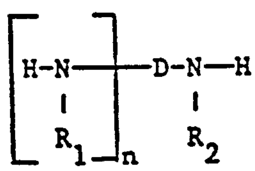

(5)

des radicaux de formules

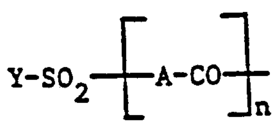

(6)

et -CO-Z (7)

ou bien qu'on utilise des précurseurs de colorants de formule (5), qui contiennent déjà des radicaux de formule (6) ou (7), et qu'on les convertit, d'une manière connue en soi, en les colorants finis souhaités de formule (1), et qu'on termine éventuellement par une autre réaction de conversion.

12. Utilisation des colorants réactifs selon la revendication 1 pour la teinture ou l'impression.

13. Utilisation selon la revendication 12, pour la teinture ou l'impression de fibres cellulosiques.